# FASCICULE DE BREVET EUROPEEN

(11) **EP 1 024 918 B1**
(45) Date de publication et mention de la délivrance du brevet: **26.09.2001**
(21) Numéro de dépôt: 98949837.3
(22) Date de dépôt: 21.10.1998
(51) Int. Cl.: B22F 9/02, B22F 9/04, B22F 1/00, C01B 3/00

(54) **NANOCOMPOSITES A INTERFACES ACTIVEES PREPARES PAR BROYAGE MECANIQUE D'HYDRURES DE MAGNESIUM ET USAGE DE CEUX-CI POUR LE STOCKAGE D'HYDROGENE**
NANOKOMPOSITE MIT AKTIVIERTEN GRENZFLÄCHEN HERGESTELLT DURCH MECHANISCHE ZERMAHLUNG VON MAGNESIUMHYDRIDEN UND DEREN VERWENDUNG ZUR WASSERSTOFFSPEICHERUNG
NANOCOMPOSITES WITH ACTIVATED INTERFACES PREPARED BY MECHANICAL GRINDING OF MAGNESIUM HYDRIDES AND USE FOR STORING HYDROGEN

(30) Priorité: 22.10.1997 CA 2217095
(43) Date de publication de la demande: 09.08.2000
(73) Titulaire: HYDRO-QUEBEC, Montréal Québec H2Z 1A4 (CA)
(72) Inventeur: SCHULZ, Robert, Sainte-Julie, Québec J0L 2S0 (CA); LIANG, Guoxiang, Québec, G1V 1B5 (CA); LALANDE, Guy, Montréal, Québec H2J 3L3 (CA); HUOT, Jacques, Sainte-Julie, Québec J0L 2S0 (CA); BOILY, Sabin, Chambly, Québec J3L 5M6 (CA); VAN NESTE, André, Sainte-Foy, Québec G1W 4B6 (CA)
(74) Mandataire: Leszczynski, André
(86) Numéro de dépôt international: CA9800987
(87) Numéro de publication internationale: WO9920422

(56) Documents cités:
- WO-A-96/19594
- US-A- 5 162 108
- US-A- 5 536 586
- US-A- 5 554 456
- CHEN Y ET AL: "FORMATION OF METAL HYDRIDES BY MECHANICAL ALLOYING" JOURNAL OF ALLOYS AND COMPOUNDS, vol. 217, no. 2, 1 février 1995, pages 181-184, XP000486485
- FUJII H ET AL: 'Hydriding properties of the Mg2Ni-H system synthesized by reactive mechanical grinding' JOURNAL OF ALLOYS AND COMPOUNDS vol. 232, no. 1-2, Janvier 1996, page L16-L19, XP004077233
- HUOT J ET AL: "Mechanical alloying of Mg-Ni compounds under hydrogen and inert atmosphere" JOURNAL OF ALLOYS AND COMPOUNDS, vol. 231, 15 décembre 1995, page 815-819 XP004077434

## Description

### Domaine technique de l'invention

La présente invention a pour objet de nouveaux nanocomposites à interfaces activées à base de magnésium (Mg) et d'un autre élément ou composé chimique connu pour être capable d'absorber l'hydrogène et être peu miscible par broyage avec le magnésium ou son hydrure, tel que par exemple le vanadium (V), le titane (Ti) ou le nobium (Nb).

L'invention a également pour objet un procédé de préparation de ces nouveaux nanocomposites par broyage mécanique intense d'hydrures de magnésium et de l'autre élément ou composé.

L'invention a enfin pour objet l'usage de ces nouveaux nanocomposites pour le stockage et/ou le transport de l'hydrogène.

### Brève description des dessins

De façon à faciliter la lecture et la compréhension de la description qui va suivre de l'état de la technique dans ce domaine, et, de là, permettre de mieux apprécier les caractéristiques originales distinguant la présente invention de cet état de la technique, on se référera ci-après aux dessins annexés dans lesquels:

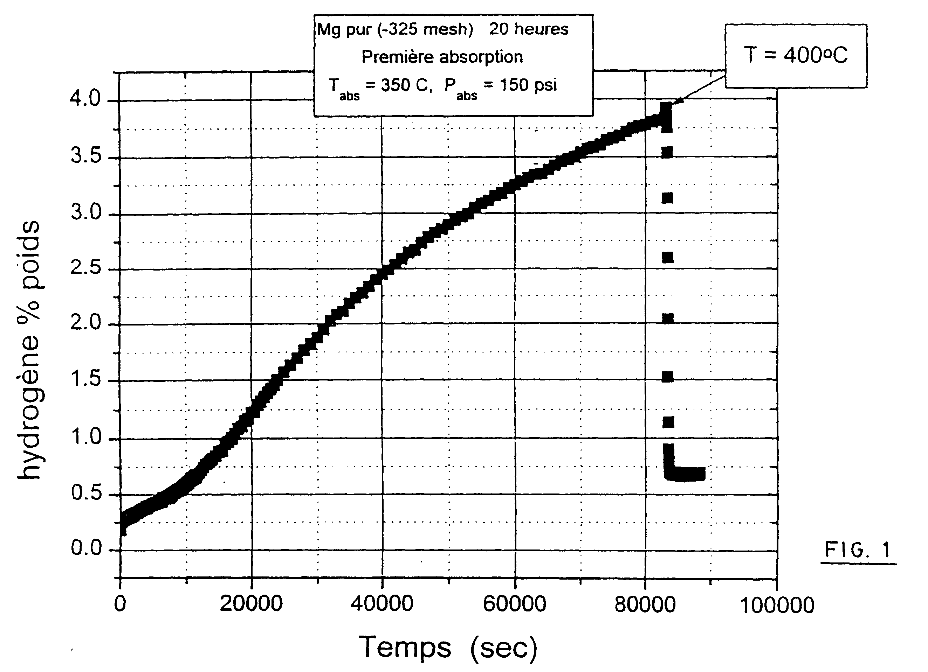

la figure 1 est une courbe donnant le taux d'absorption en hydrogène mesuré en fonction du temps lors d'un premier cycle d'absorption et de désorption effectués à 350°C sous une pression de 150 psi sur une poudre nanocristalline de Mg préparée par broyage mécanique intense pendant 20 heures d'une poudre de Mg pur (325 mesh);

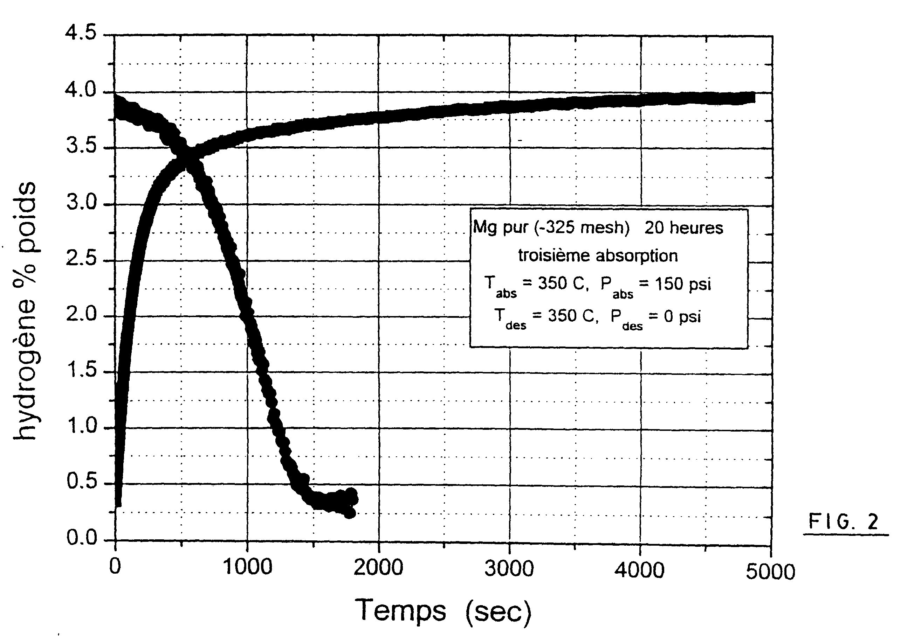

la figure 2 est une courbe similaire à celle de la figure 1 mais à une échelle de temps différente, cette courbe ayant été obtenue lors d'un troisième cycle d'absorption et de désorption effectué sur la même poudre nanocristalline de Mg dans les mêmes conditions;

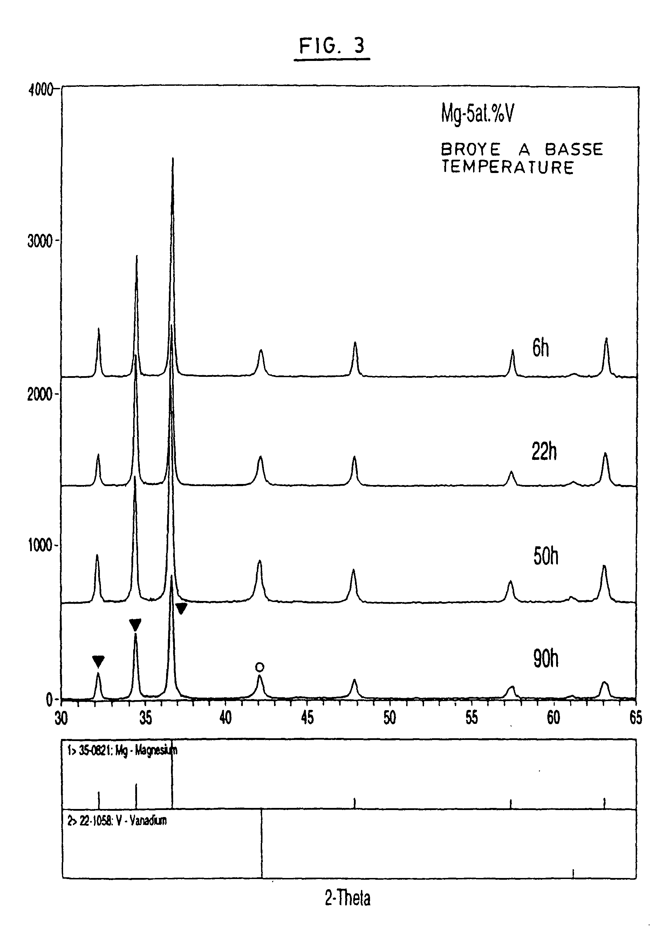

la figure 3 est une courbe de diffraction au rayon X montrant les pics associés à la présence de Mg ( 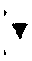 ) et ceux associés à la présence de V(°) dans un nanocomposite à base de Mg contenant 5% at. de V, ce nanocomposite ayant été préparé par broyage mécanique intense de poudres de Mg pur (325 mesh) et de V pendant 20 heures;

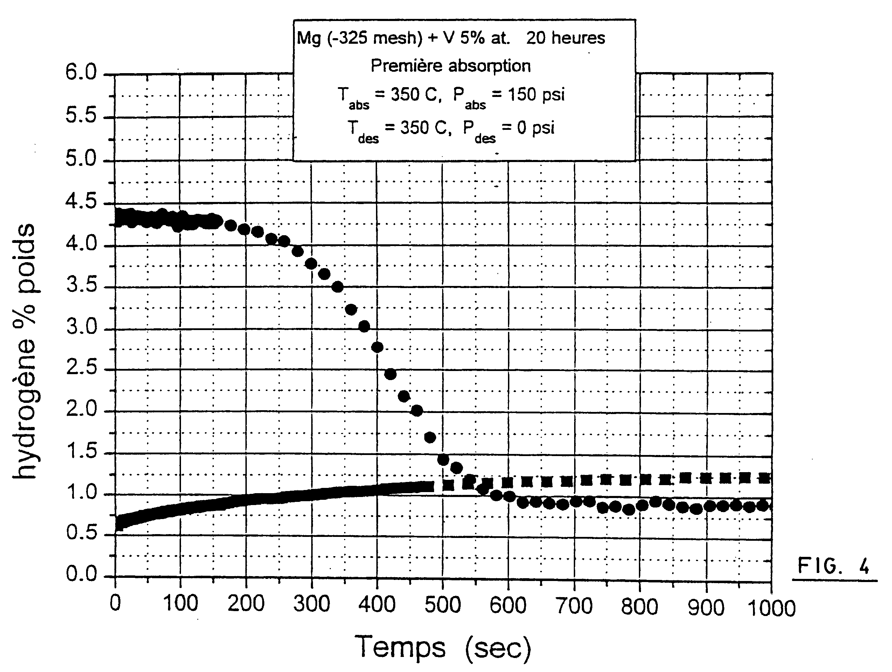

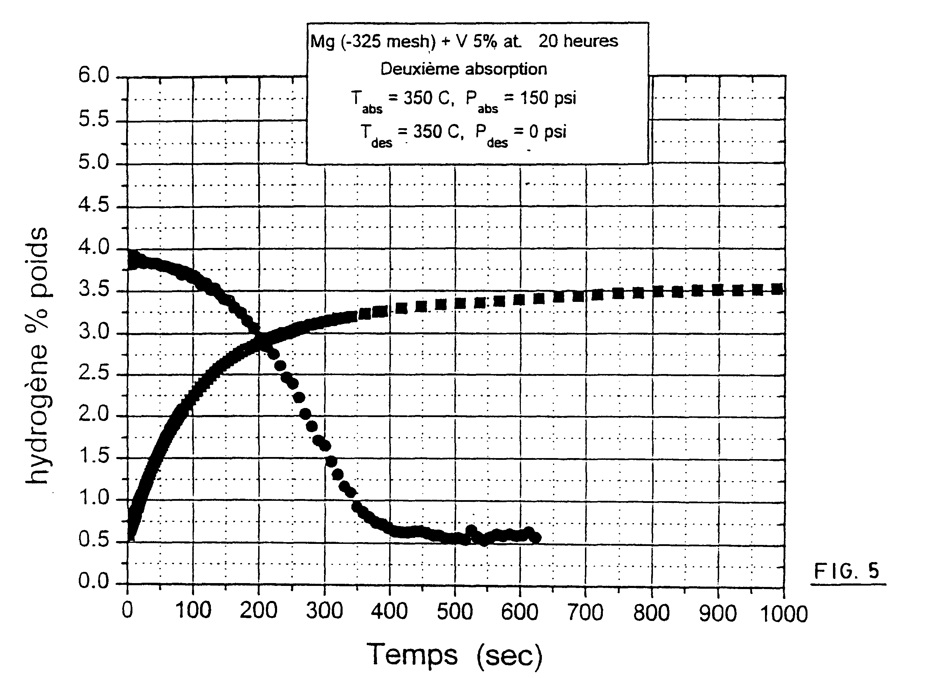

la figure 4 et 5 sont des courbes donnant le taux d'absorption en hydrogène mesuré en fonction du temps lors d'un premier et d'un second cycles d'absorption et de désorption effectués à 350°C sous une pression de 150 psi sur le nanocomposite dont la courbe de diffraction au rayon X est illustré sur la figure 3;

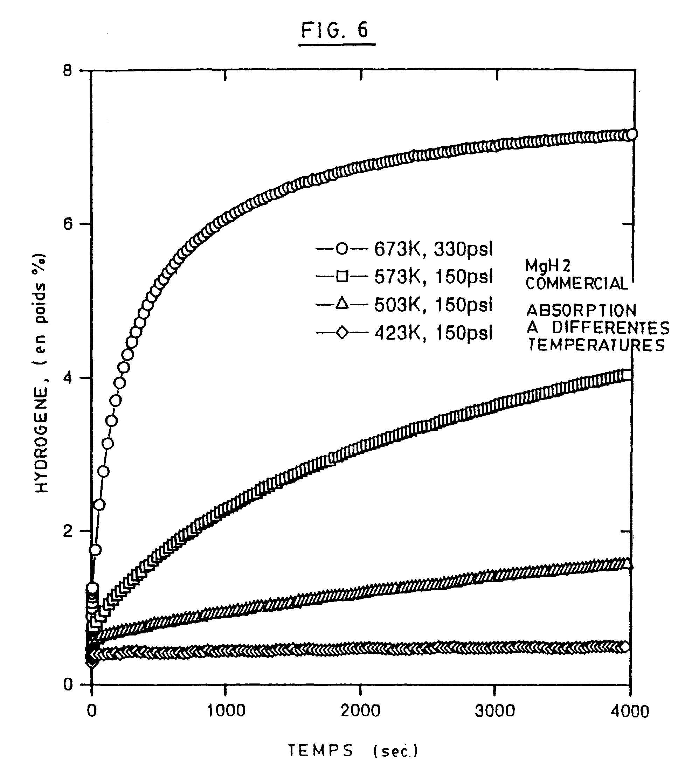

la figure 6 est une courbe donnant le taux d'absorption en hydrogène mesuré en fonction du temps lors d'un premier cycle d'absorption effectué à différentes températures et pressions sur une poudre de Mg obtenues par désorption d'une poudre polycristalline de MgH₂ de type commercial;

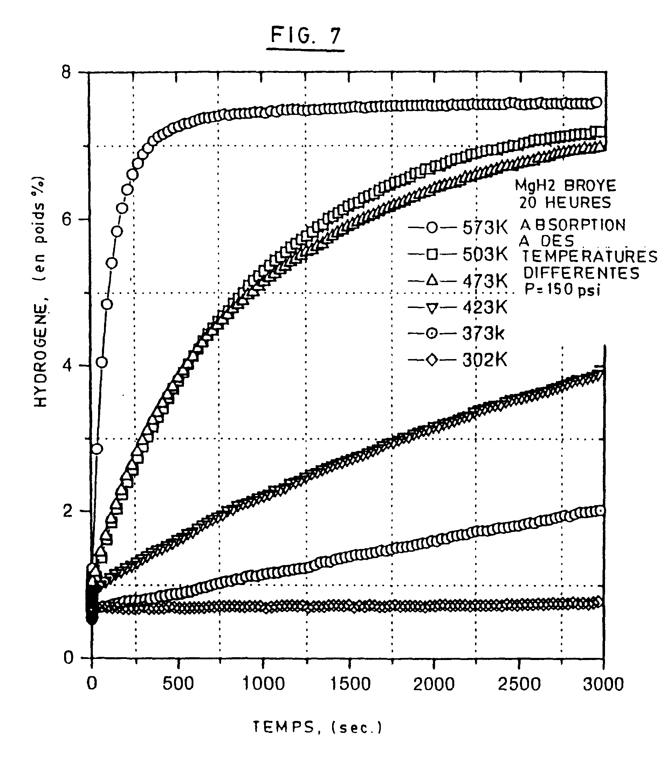

la figure 7 est une courbe analogue à celle de la figure 6 mais à une échelle de temps différente, cette courbe donnant le taux d'absorption en hydrogène mesuré en fonction du temps lors d'un premier cycle d'absorption effectué à différentes températures mais sous une même pression de 150 psi sur une poudre nanocristalline de Mg obtenue par broyage mécanique intense durant 20 heures puis désorption d'une poudre polycristalline commerciale de MgH₂;

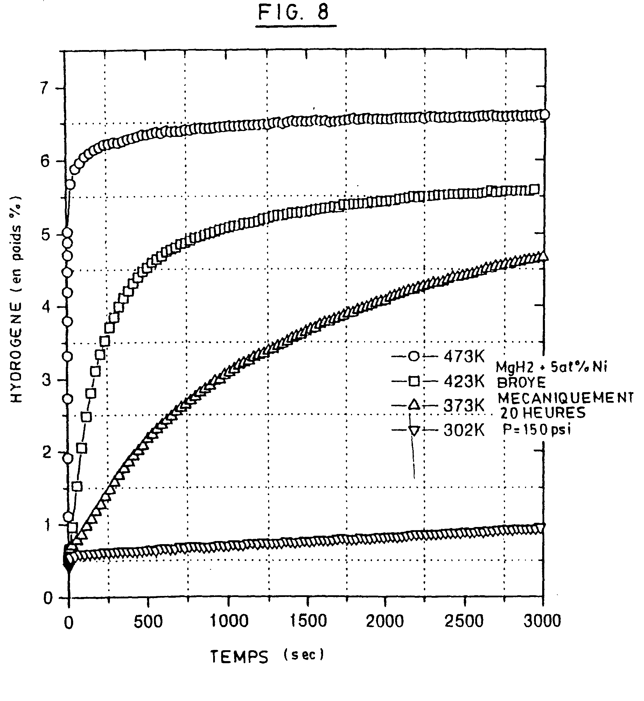

la figure 8 est une courbe analogue à celle de la figure 7, donnant le taux d'absorption en hydrogène mesuré en fonction du temps lors d'un premier cycle d'absorption effectué à différentes températures mais sous une même pression de 150 psi sur une poudre nanocristalline d'un composite de Mg et Ni préparée par broyage mécanique intense durant 20 heures puis désorption d'un mélange de la poudre polycristalline commerciale de MgH₂ précédemment mentionnée avec 5% at. d'une poudre de Ni;

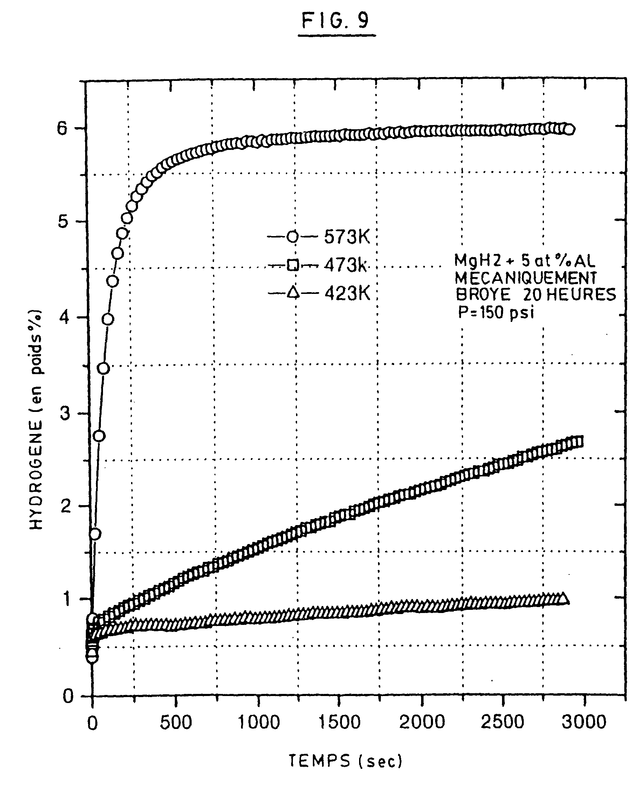

la figure 9 est une courbe analogue à celle de la figure 7, donnant le taux d'absorption en hydrogène mesuré en fonction du temps lors d'une premier cycle d'absorption effectué à différentes températures mais sous une même pression de 150 psi sur une poudre nanocristalline d'un composite de Mg et Al préparée par broyage mécanique intense durant 20 heures puis désorption d'un mélange d'une poudre polycristalline commerciale de MgH₂ avec 5% at. d'une poudre d'Al;

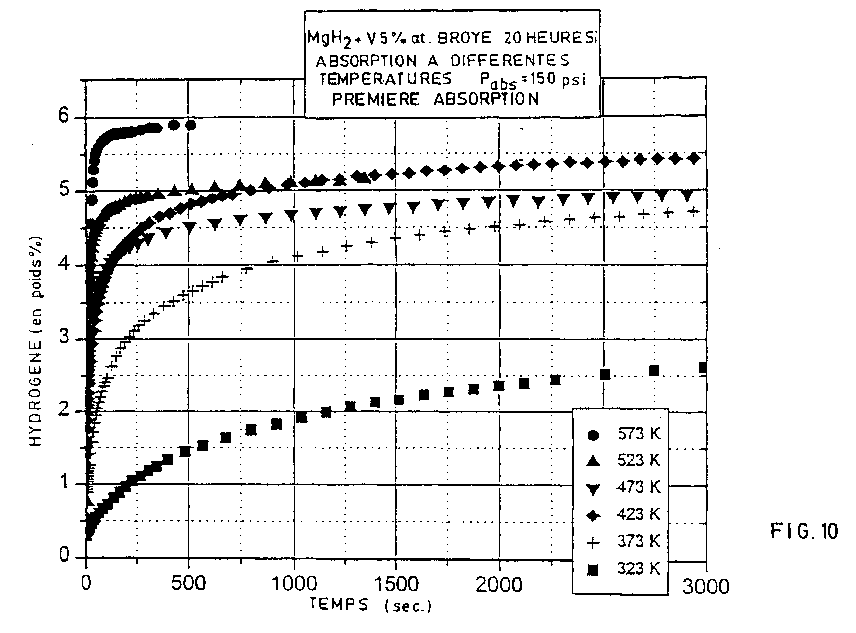

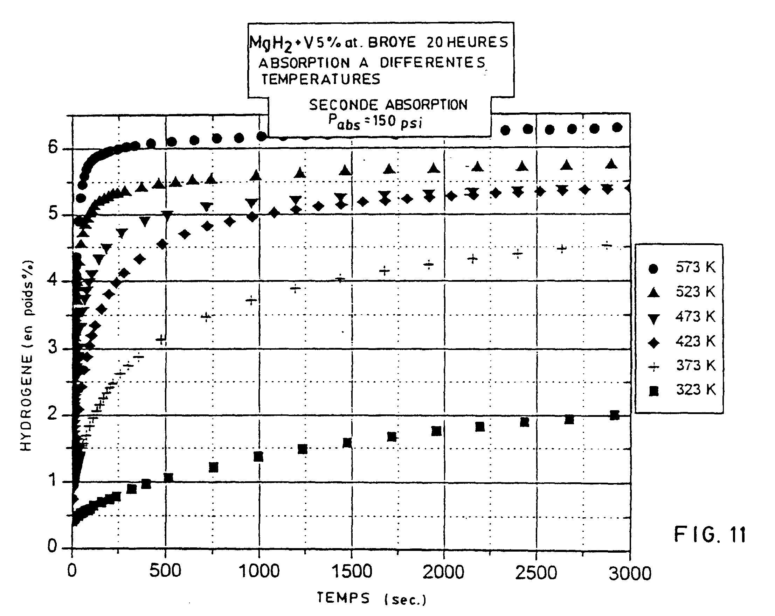

les figures 10 et 11 sont des courbes donnant le taux d'absorption en hydrogène mesuré en fonction du temps lors d'un premier et d'un second cycles d'absorption effectués à différentes températures mais sous une même pression de 150 psi sur une poudre d'un nanocomposite selon l'invention préparée par broyage mécanique intense durant 20 heures puis désorption d'un mélange d'une poudre polycristalline commerciale de MgH₂ avec 5% at. d'une poudre de V;

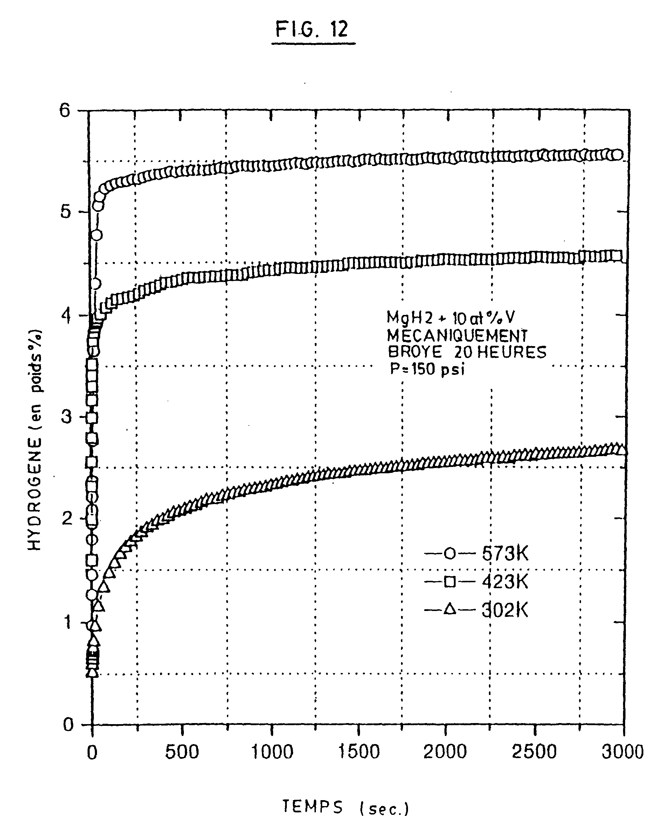

la figure 12 est une courbe analogue à celle de la figure 7, donnant le taux d'absorption en hydrogène mesuré en fonction du temps lors d'un premier cycle d'absorption effectué à différentes températures mais sous une même pression de 150 psi sur une poudre d'un nanocomposite de Mg et V selon l'invention préparée par broyage mécanique intense durant 20 heures puis désorption d'un mélange d'une poudre polycristalline commerciale de MgH₂ avec 10% at. d'une poudre de V;

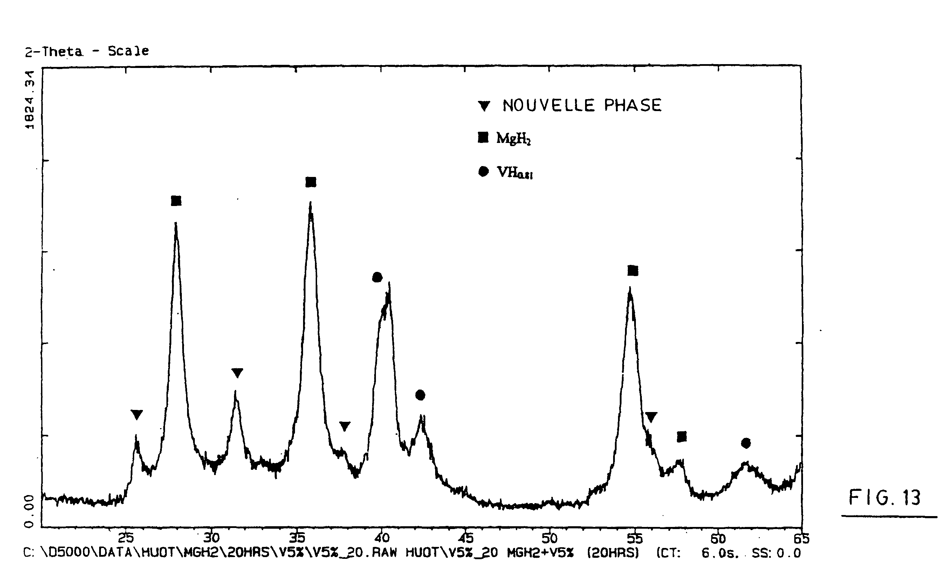

la figure 13 est une courbe de diffraction au rayon X montrant des pics associés à la présence simultanée de MgH₂, de VH et d'une nouvelle phase (Y MgH₂) dans une poudre nanocristalline obtenue après broyage mécanique intense pendant 20 heures d'un mélange d'une poudre polycristalline commerciale de MgH₂ avec 5% at. d'une poudre de V;

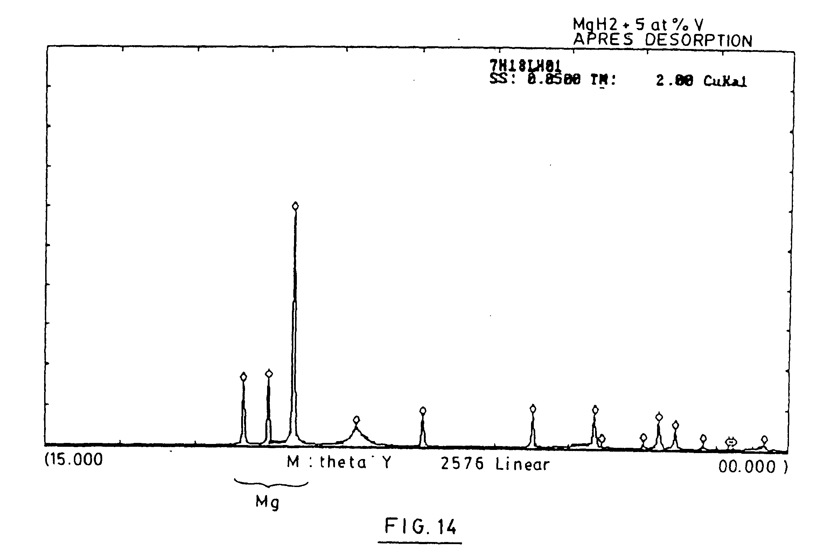

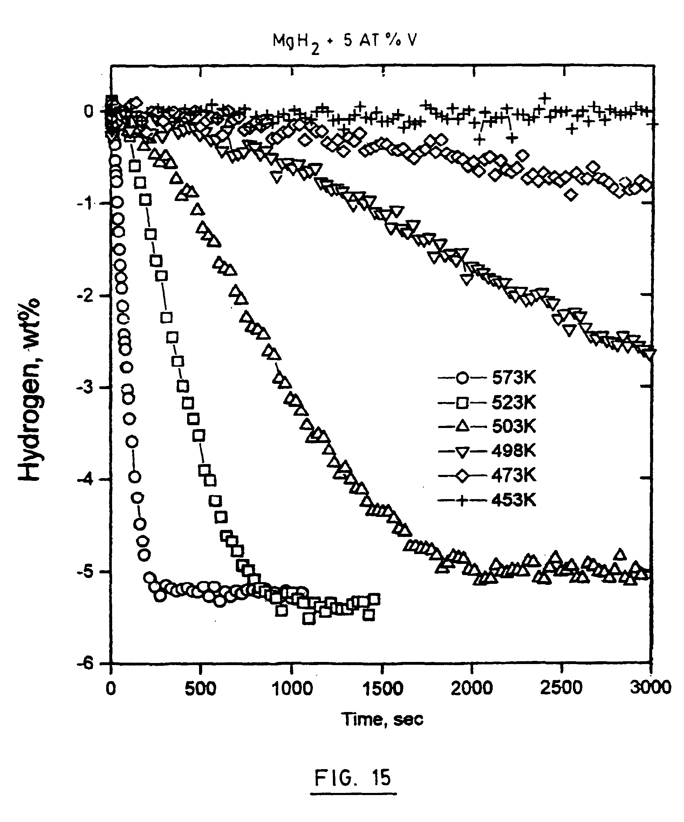

la figure 14 est une courbe de diffraction similaire à celle de la figure 13, cette courbe montrant les pics associés à la présence de Mg et de V dans la poudre nanocristalline utilisée lors des essais d'absorption reportées sur la figure 13, après désorption; la figure 15 est une courbe donnant le taux de désorption en hydrogène mesuré en fonction du temps lors d'un premier cycle de désorption effectué à des températures différentes mais sous une même pression de 0 psi sur une poudre d'un nanocomposite selon l'invention préparée par broyage mécanique intense durant 20 heures puis désorption d'un mélange d'une poudre polycristalline commerciale de MgH₂ avec 5% at. d'une poudre de V;

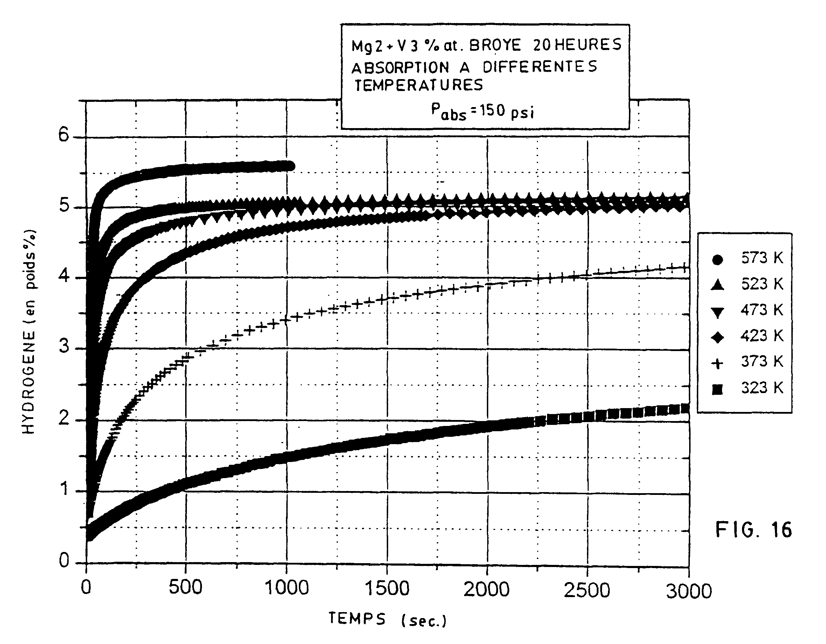

la figure 16 est une courbe analogue à celle de la figure 10 si ce n'est que le nanocomposite préparé et utilisé pour les mesures contenait 3% at. de V uniquement;

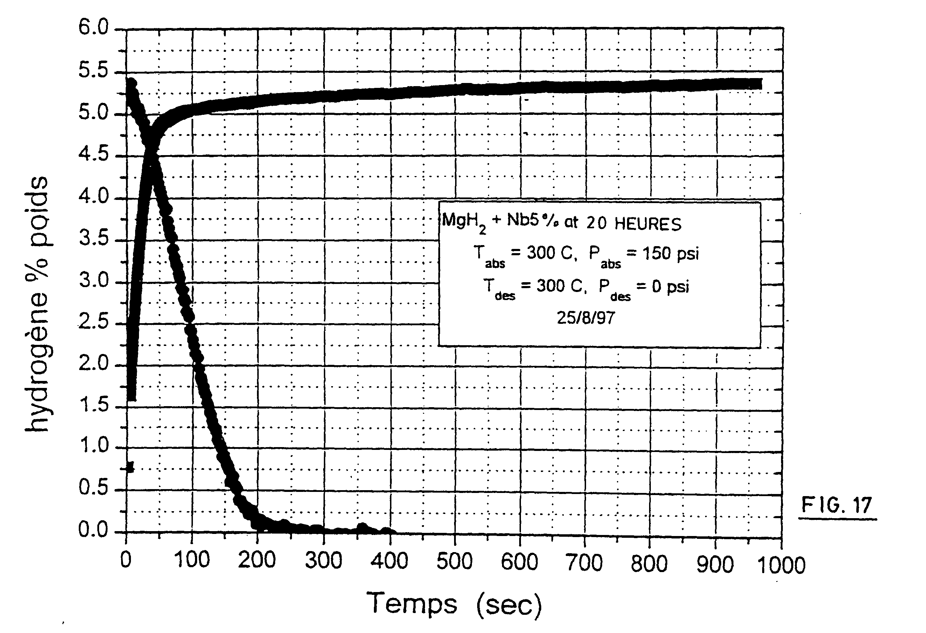

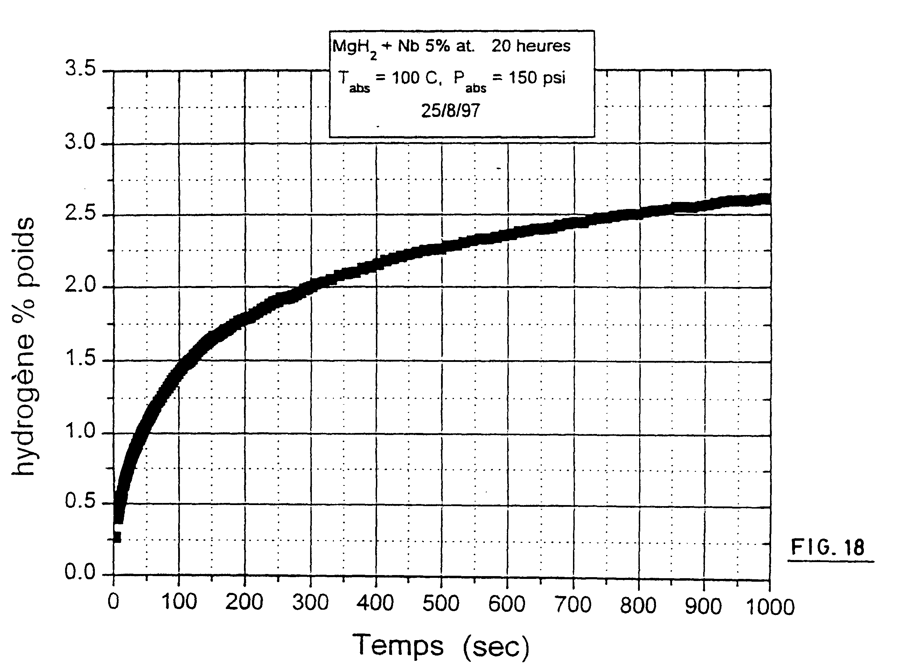

les figures 17 et 18 sont des courbes donnant le taux d'absorption et de désorption en hydrogène mesuré en fonction du temps lors d'une première absorption et désorption effectuées à 300°C et 100°C, respectivement, sous une même pression de 150 psi, sur une poudre d'un nanocomposite selon l'invention préparée par broyage mécanique intense durant 20 heures puis désorption d'un mélange d'une poudre polycristalline commerciale de MgH₂ avec 5% at. d'une poudre de Nb;

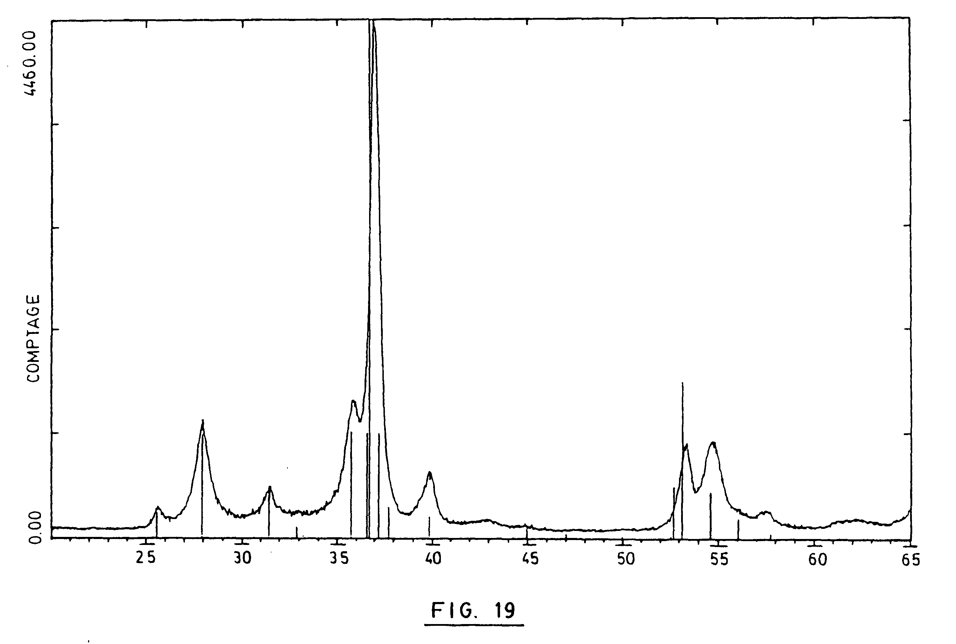

la figure 19 est une courbe de diffraction au rayon-X montrant des pics associés à la présence simultanée de MgH₂, de NbH et d'une nouvelle phase (y MgH2) dans une poudre nanocristalline obtenue après broyage mécanique intense pendant 20 heures d'un mélange d'une poudre polycristalline commerciale de MgH₂ avec 5% at. d'une poudre de Nb;

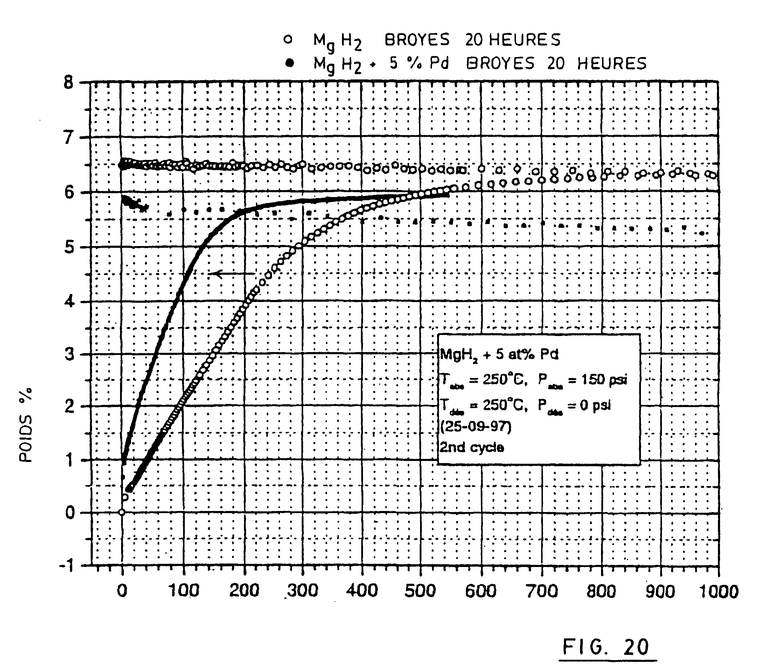

la figure 20 est une courbe donnant les taux d'absorption et de désorption en hydrogène mesurés en fonction du temps lors d'un second cycle d'absorption effectué à 250°C sous une pression de 150 psi et désorption à la même température sous une pression de 0 psi, les mesures ayant été effectuées sur une poudre d'un nanocomposite selon l'invention préparée par broyage mécanique intense durant 20 heures puis désorption d'une poudre polycrystalline commerciale de MgH₂ avec 5% at. d'une poudre de Pd, et, à titre comparatif, une poudre nanocristalline de MgH₂ préparée par broyage mécanique intense durant 20 heures de la même poudre polycristalline de MgH₂, mais sans Pd;

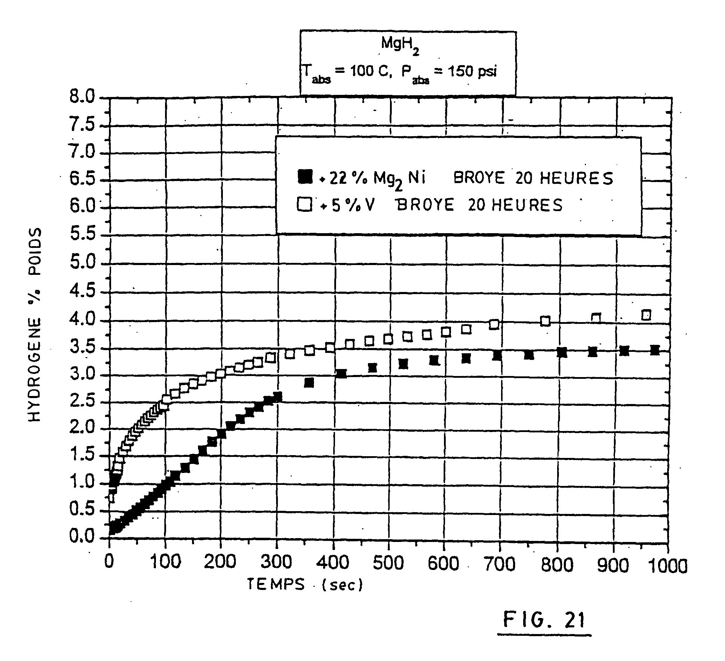

la figure 21 est une courbe donnant, à titre comparatif, les taux d'absorption en hydrogène mesurés en fonction du temps lors d'un premier cycle d'absorption effectué à 100°C sous une pression de 150 psi sur des poudres de nanocomposites selon l'invention préparée par broyage mécanique intense durant 20 heures puis désorption d'une poudre polycristalline commerciale de MgH₂ avec, respectivement, 5% at. d'une poudre de V et 22% at. d'une poudre de Mg₂Ni;

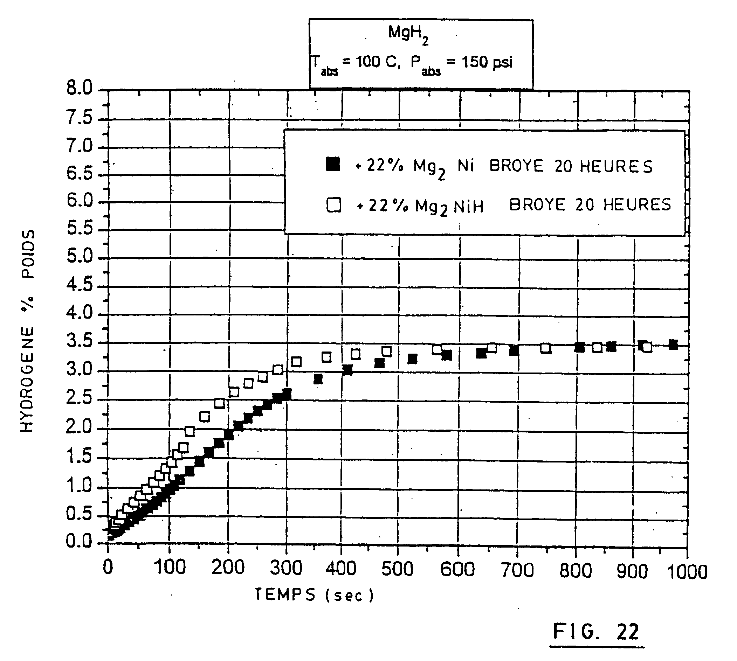

la figure 22 est une courbe analogue à celle de la figure 21, si ce n'est que les nanocomposites selon l'invention ont été préparés par mélange à partir d'une poudre polycristalline commerciale de MgH₂ avec respectivement 22% at. d'une poudre de Mg₂Ni et 22% at. d'une poudre de Mg₂NiH₄;

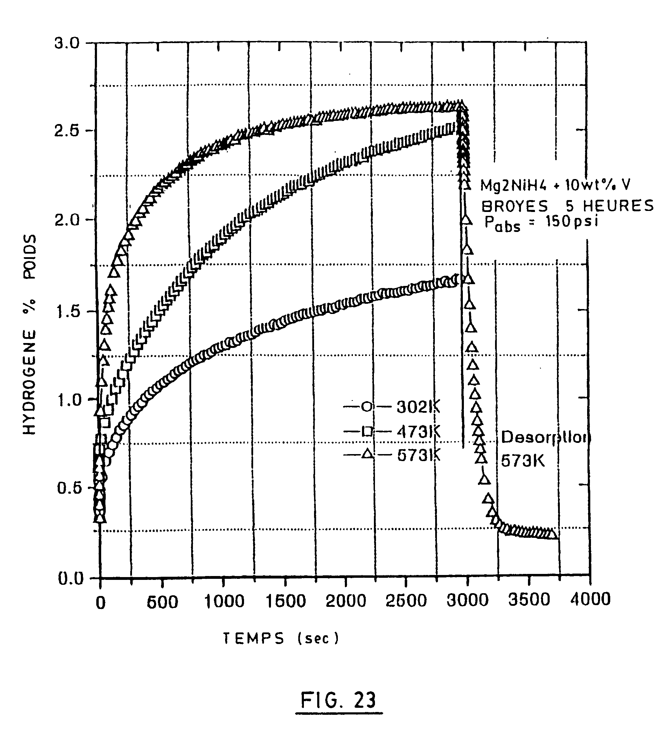

la figure 23 est une courbe donnant les taux d'absorption en hydrogène mesurés en fonction du temps lors d'un premier cycle d'absorption à différentes températures mais sous une même pression de 150 psi sur des poudres d'un nanocomposite selon l'invention préparée par broyage intense durant 20 heures puis désorption d'un mélange d'une poudre de Mg₂NiH₄ avec 10% de V;

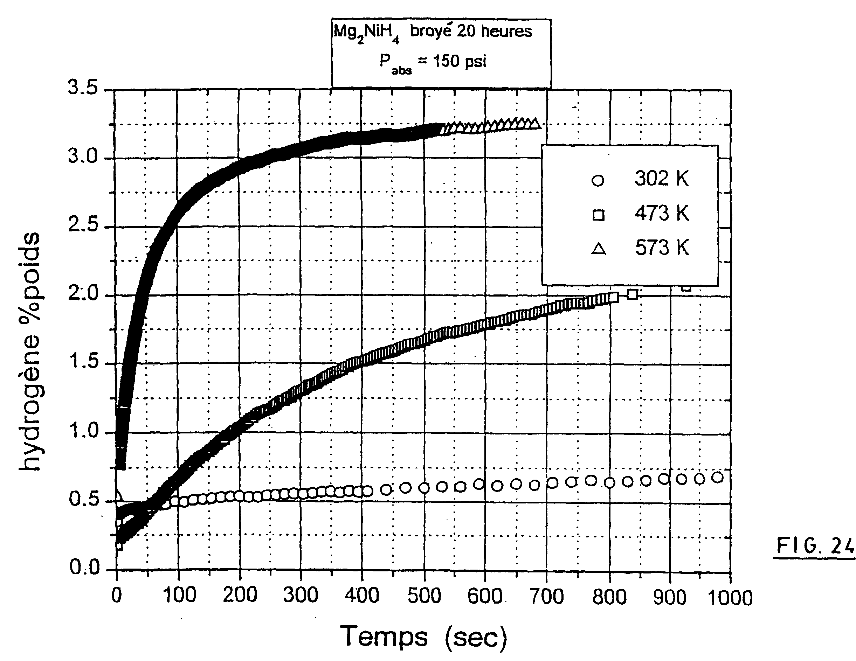

la figure 24 est une courbe analogue à celle de la figure 23 et donnée à titre comparatif, pour laquelle les mesures ont été effectuées dans les mêmes conditions mais en utilisant une poudre nanocristalline obtenue par broyage intense durant 20 heures puis désorption d'une poudre de Mg₂NiH₄ sans ajout de V;

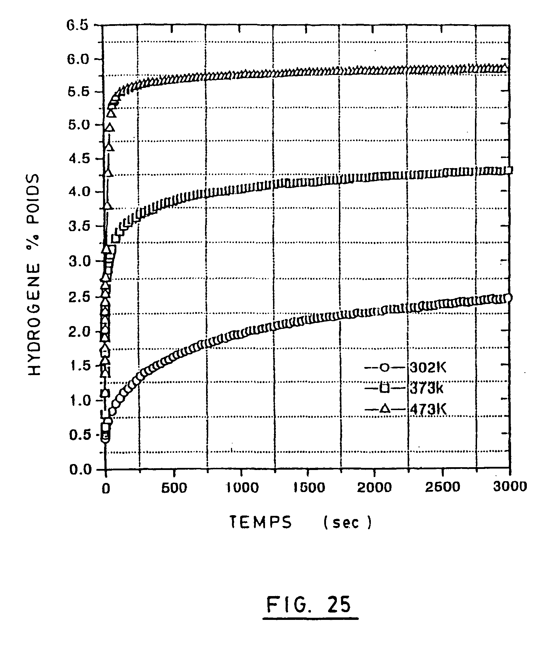

la figure 25 est une courbe donnant les taux d'absorption en hydrogène mesurés en fonction du temps lors de cycles d'absorption effectués à différentes températures sous une pression de 150 psi sur une poudre d'un nanocomposite selon l'invention préparée par broyage mécanique intense durant 20 heures puis désorption et exposition à l'air pendant deux jours, d'un mélange de MgH₂ avec 5% at. de V;

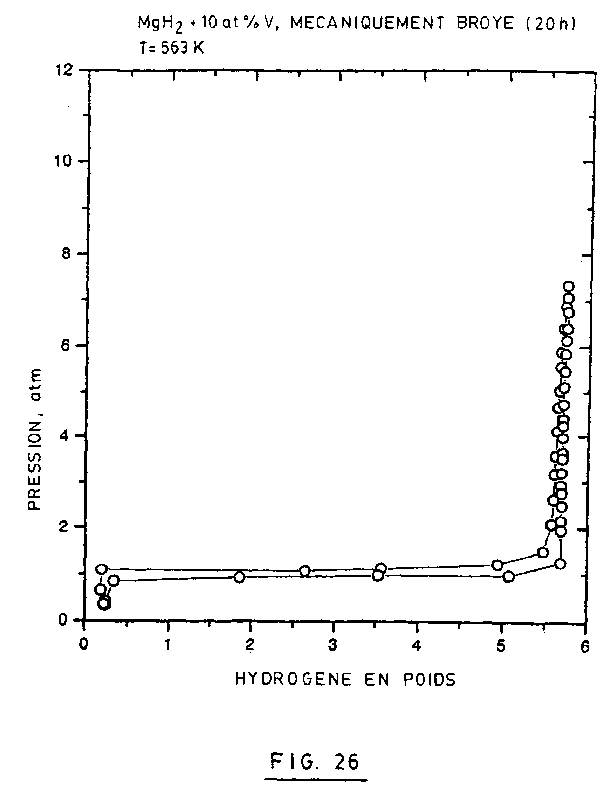

la figure 26 est une courbe isotherme de pression-concentration obtenue à une température de 563°K avec un nanocomposite selon l'invention préparé par broyage mécanique intense durant 20 heures d'un mélange d'une poudre de MgH₂ avec 10% at. de V;

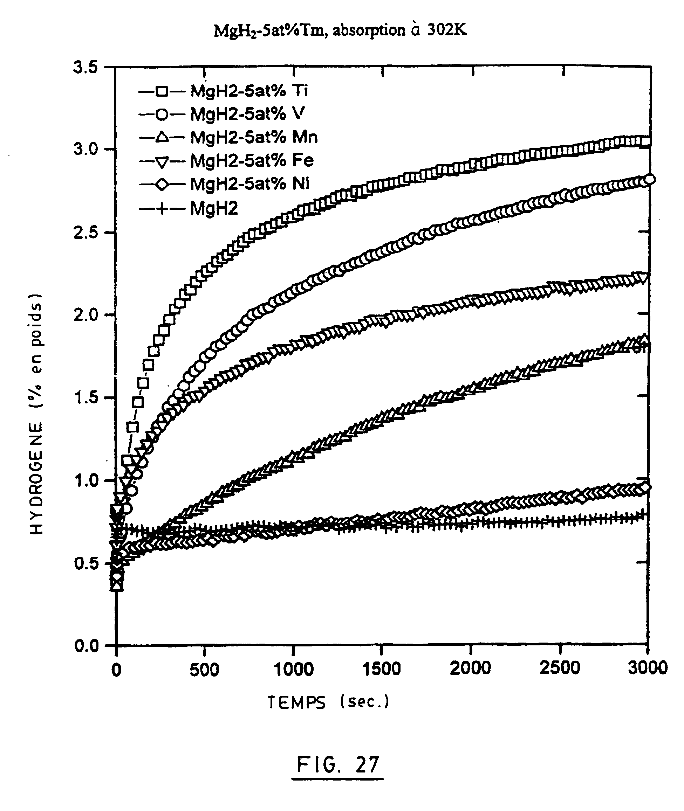

la figure 27 est une courbe donnant les taux d'absorption en hydrogène mesurés en fonction du temps lors de premiers cycles d'absorption effectués à 302°K sous une pression de 150 psi sur les poudres de nanocomposites selon l'invention préparées par broyage intense durant 20 heures puis désorption d'un mélange d'une poudre de MgH₂ avec 5% at. d'un métal de transition Tm choisi parmi Ti, V, Mn, Fe, Ni, cette même courbe donnant également à titre de référence la mesure d'absorption obtenue sur une poudre nanocristalline de MgH₂ sans aucun additif;

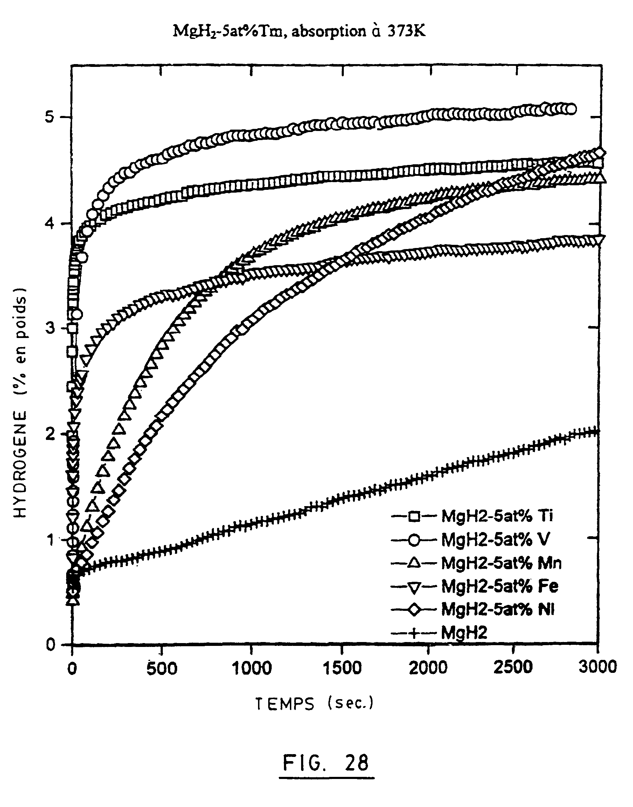

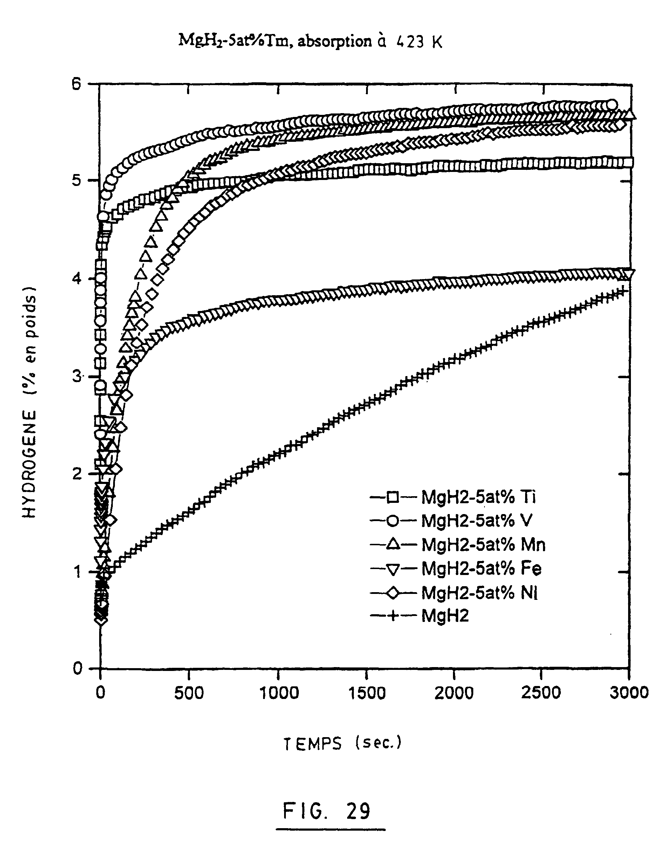

les figures 28 et 29 sont des courbes identiques à celles illustrées sur la figure 27, si ce n'est les températures d'absorption qui ont été de 373°K et 423°K, respectivement;

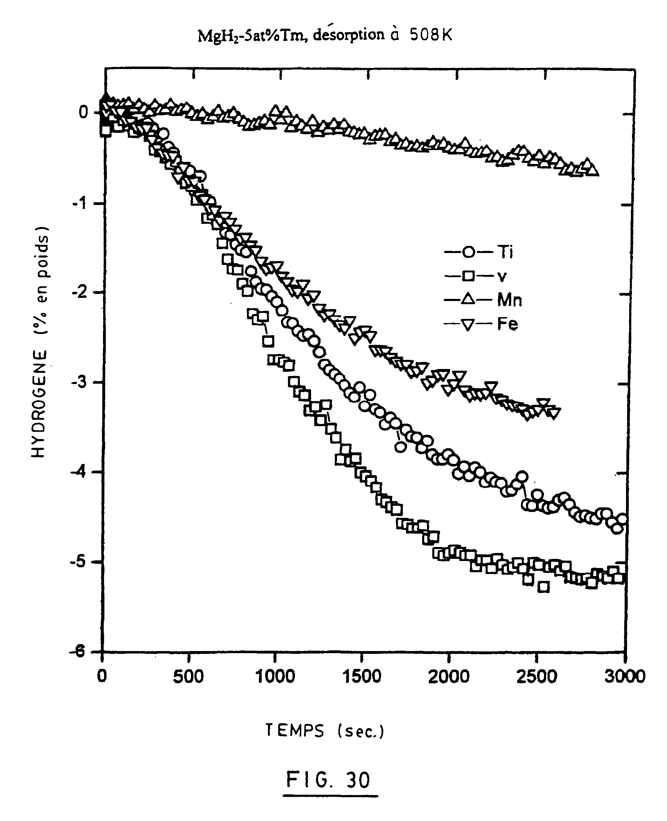

la figure 30 est une courbe donnant les taux de désorption d'hydrogène mesurés à 0 psi et 508°K sur des poudres nanocristallines selon l'invention obtenues par broyage mécanique intense durant 20 heures d'un mélange d'une poudre de MgH₂ avec 5% at. d'un métal transition Tm choisi parmi Ti, V, Mn et Fe;

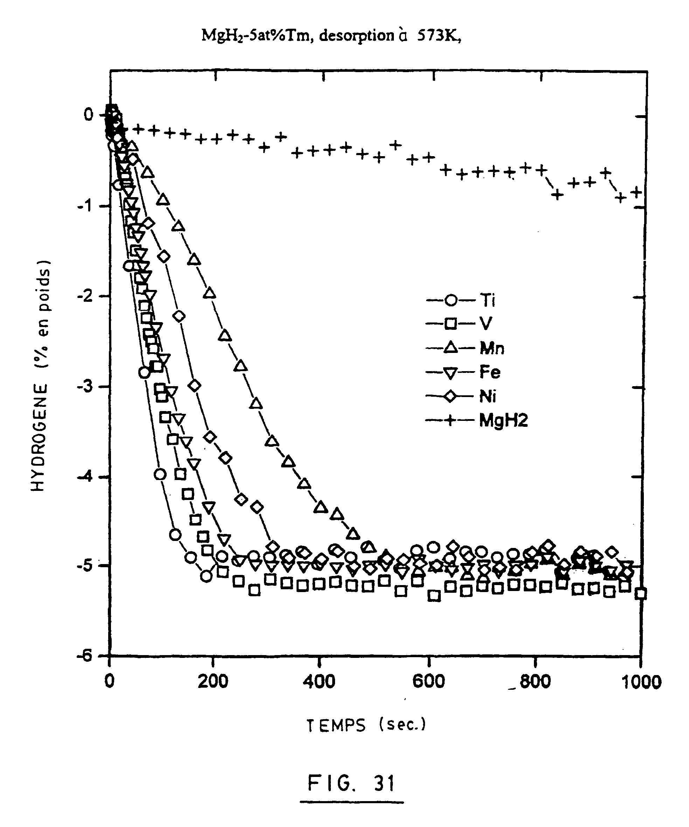

la figure 31 est une courbe identique à celle de la figure 30 dans laquelle la désorption a été effectuée à 573°K, cette même courbe donnant également la désorption obtenue sur une poudre nanocristalline constituée de MgH₂ uniquement à titre de référence;

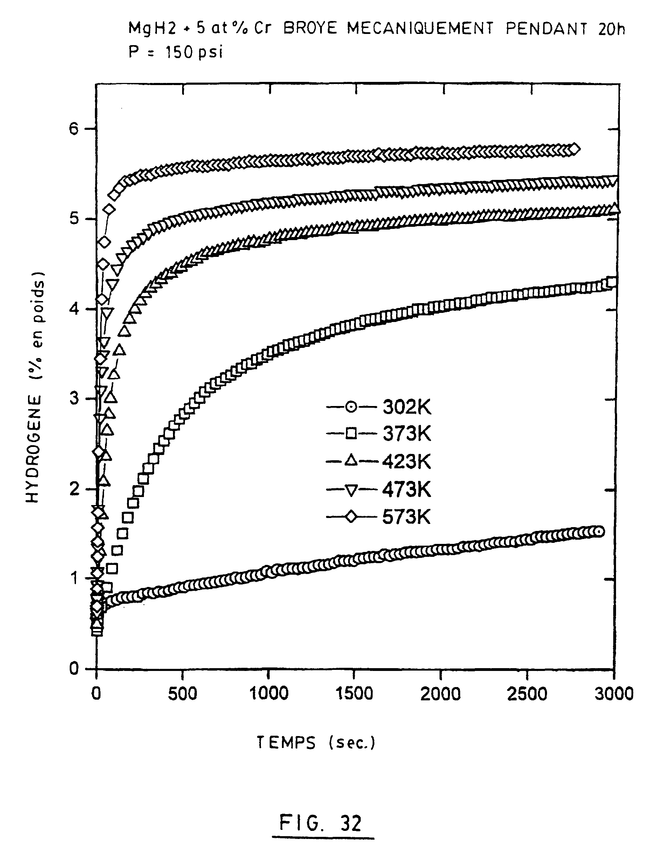

la figure 32 est une courbe donnant le taux d'absorption d'hydrogène mesuré en fonction du temps lors d'un premier cycle d'absorption effectué à différentes températures sous une pression de 150 psi sur une poudre d'un nanocomposite selon l'invention préparée par broyage mécanique intense durant 20 heures et désorption d'un mélange de MgH₂ avec 5% at. de Cr;

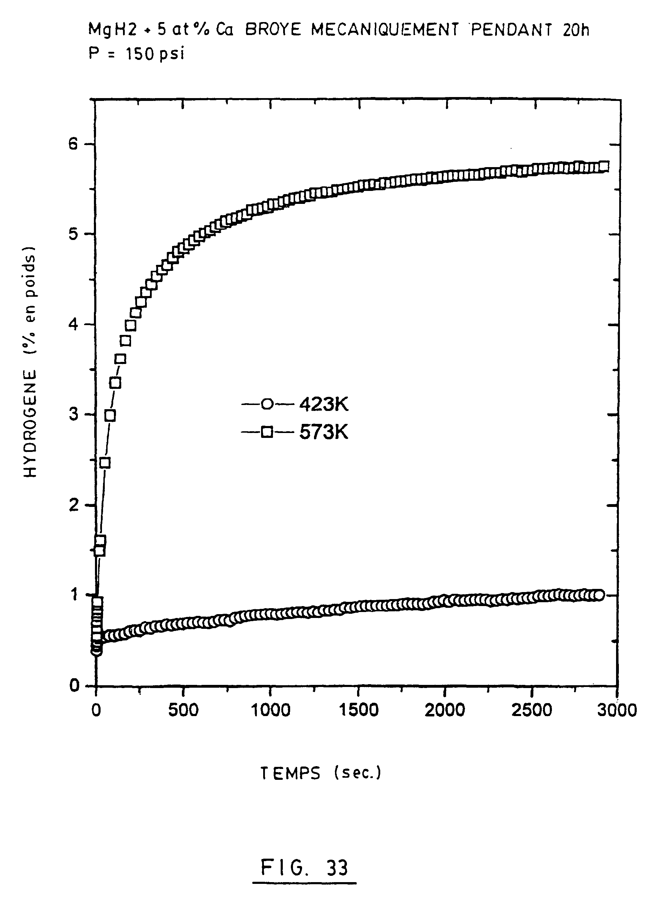

la figure 33 est une courbe donnant le taux d'absorption d'hydrogène mesuré en fonction du temps lors d'un premier cycle d'absorption effectué à différentes températures sous une pression de 150 psi sur une poudre d'un nanocomposite selon l'invention préparée par broyage mécanique intense durant 20 heures et désorption d'un mélange de MgH₂ avec 5% at. de Ca;

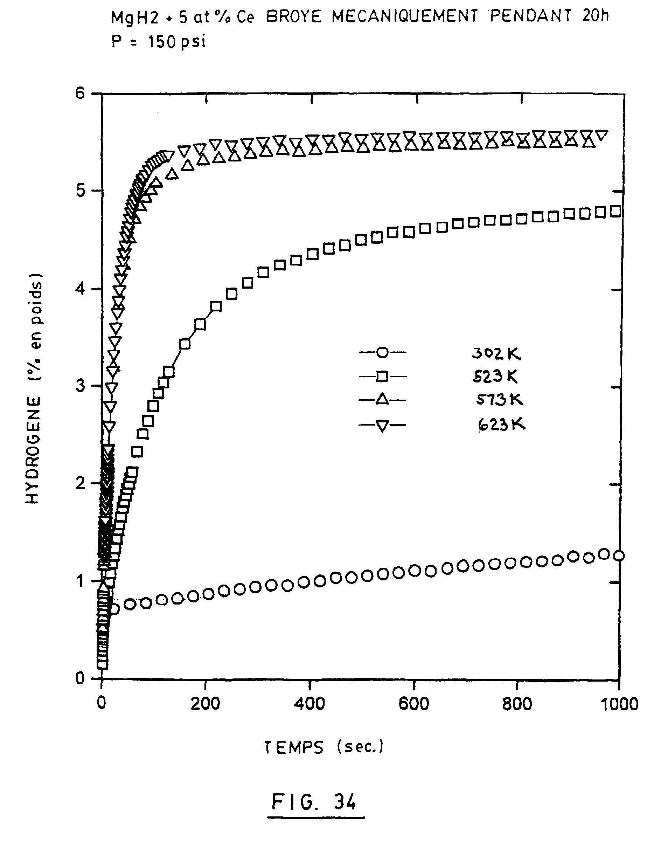

la figure 34 est une courbe donnant le taux d'absorption d'hydrogène mesuré en fonction du temps lors d'un premier cycle d'absorption effectué à différentes températures sous une pression de 150 psi sur une poudre d'un nanocomposite selon l'invention préparée par broyage mécanique intense durant 20 heures et désorption d'un mélange de MgH₂ avec 5% at. de Ce;

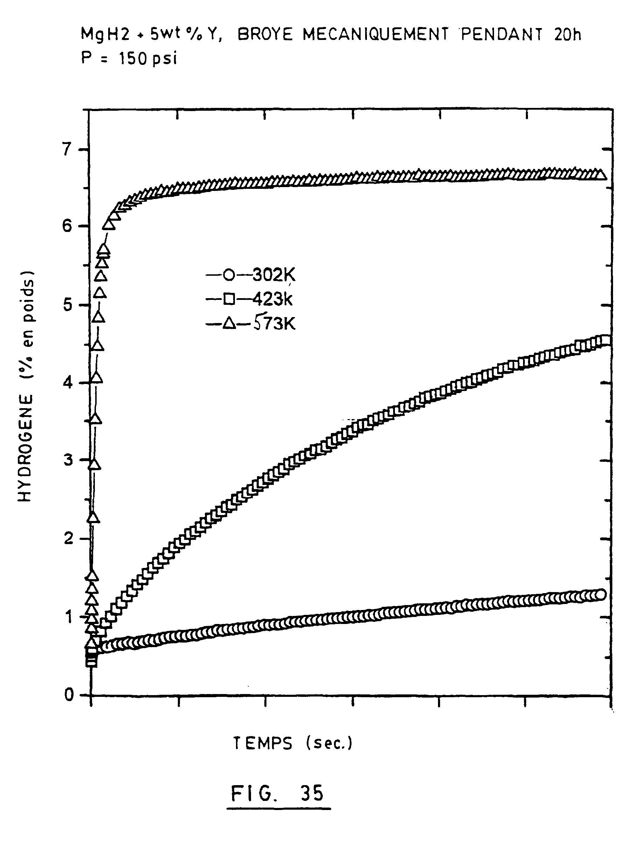

la figure 35 est une courbe donnant le taux d'absorption d'hydrogène mesuré en fonction du temps lors d'un premier cycle d'absorption effectué à différentes températures sous une pression de 150 psi sur une poudre d'un nanocomposite selon l'invention préparée par broyage mécanique intense durant 20 heures et désorption d'un mélange de MgH₂ avec 5% at. de Y;

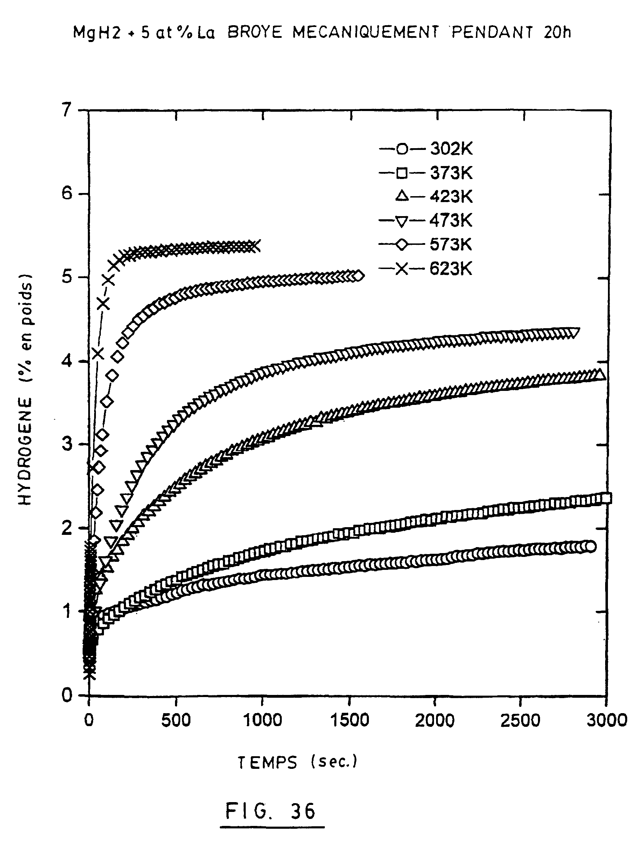

la figure 36 est une courbe donnant les taux d'absorption d'hydrogène mesuré en fonction du temps lors d'un premier cycle d'absorption effectué à différentes températures sous une pression de 150 psi sur une poudre d'un nanocomposite selon l'invention préparée par broyage mécanique intense durant 20 heures et désorption d'un mélange de MgH₂ avec 5% at. de La;

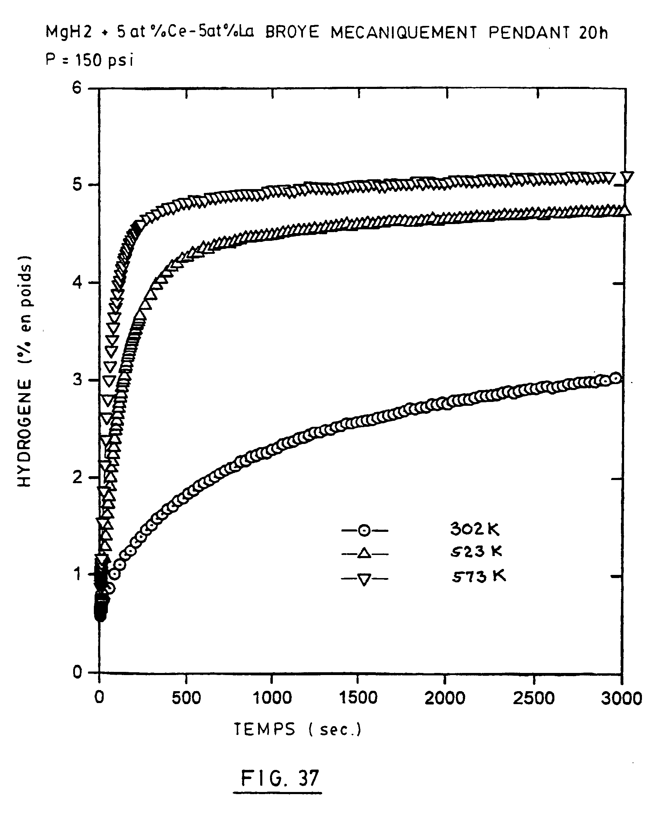

la figure 37 est une courbe donnant les taux d'absorption d'hydrogène mesurés en fonction du temps lors du premier cycle d'absorption effectué à différentes températures sous une pression de 150°C d'un nanocomposite selon l'invention préparé par broyage mécanique intense durant 20 heures puis désorption d'un mélange d'une poudre MgH₂ avec 5% at de Ce et 5% at de La;

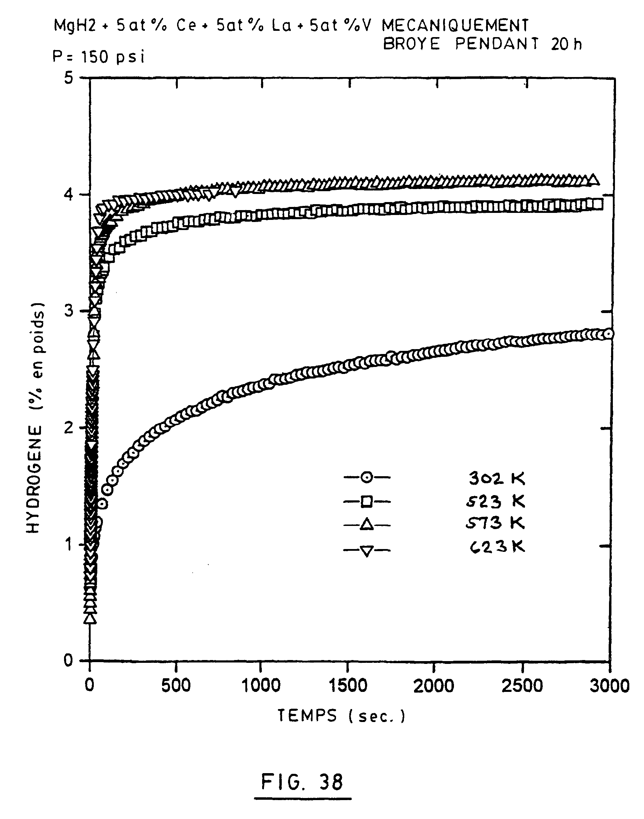

la figure 38 est une courbe donnant les taux d'absorption d'hydrogène mesurés en fonction du temps lors du premier cycle d'absorption effectué à différentes températures sous une pression de 150 psi d'un nanocomposite selon l'invention préparé par broyage mécanique intense durant 20 heures puis désorption d'un mélange d'une poudre MgH₂ avec 5% at de Ce et 5% at. de La et 5% at. de V;

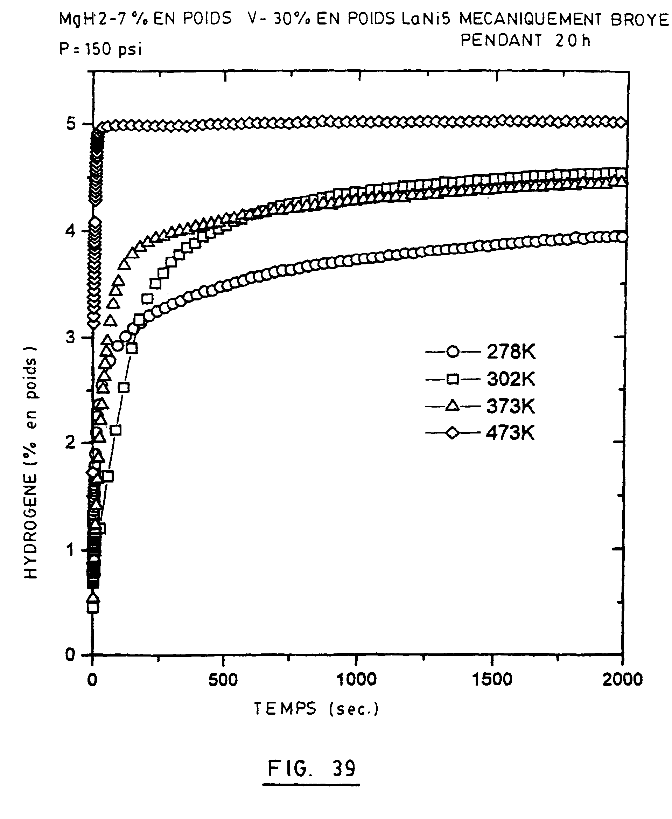

la figure 39 est une courbe donnant les taux d'absorption d'hydrogène mesurés en fonction du temps lors du premier cycle d'absorption effectué à différentes températures sous une pression de 150 psi sur un nanocomposite selon l'invention préparé par broyage mécanique intense durant 20 heures puis désorption d'un mélange d'une poudre MgH₂ avec 7% en poids de V et 30% en poids de LaNi₅; et

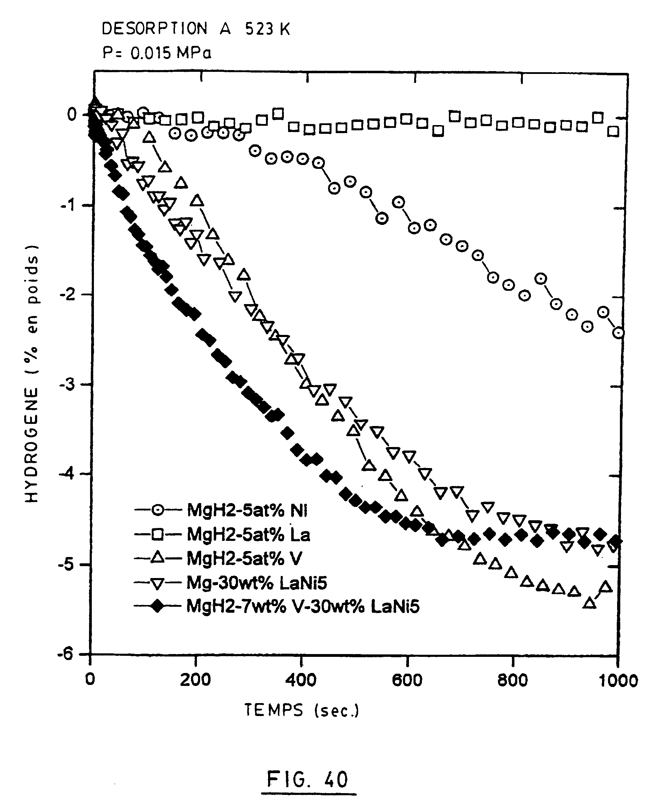

la figure 40 est une courbe donnant le taux de désorption en hydrogène mesuré en fonction du temps lors d'un premier cycle de désorption effectué à une pression de 0.015 MPa à une température de 523°K sur des poudres nanocristallines selon l'invention préparées par broyage intense durant 20 heures puis désorption d'un mélange d'une poudre de MgH₂ avec 5% at. de Ni; MgH₂ avec 5% at. de La; MgH₂ avec 5% at. de V; MgH₂ avec 30% en poids de LaNi_{5;} et MgH₂avec 7%en poids de V et 30% en poids de LaNi₅, respectivement.

### Description de l'état de la technique

La demande de brevet intemationale publiée le 8 août 1996 sous le numéro WO 96/23906 décrit de nouveaux composés capables d'absorber de l'hydrogène avec une très bonne cinétique. Ces nouveaux composés se présentent sous la forme de poudres de particules nanocristallines de formule:

Mg₁₋ₓAₓ

dans laquelle A peut représenter divers métaux dont le vanadium (V) et le nobium (Nb) et x est une fraction atomique comprise entre 0 et 0,3. Par "particules nanocristallines", on entend des particules dont les grains ont une taille moyenne comprise entre 3 et 100 nm.

Dans la demande WO 96/23906, il est également décrit que les composés en question peuvent être préparés en soumettant un mélange de particules de Mg et du métal A à un broyage mécanique intense pendant plusieurs heures. Il est enfin décrit que des essais d'absorption effectués sur un composé de formule Mg_{0,96}V_{0,04} (voir exemple 2) se sont avérés très positifs.

Les figures 1 à 5 des dessins annexés sont illustratifs des caractéristiques d'absorption et désorption des composés décrits dans cette demande internationale WO 96/23906. Les figures 1 et 2 illustrent le cas où le composé est une poudre nanocristalline de Mg pur dont la taille des cristallites est de l'ordre de 30 nm. On voit que dès le troisième cycle d'absorption/désorption, de très bons résultats sont obtenus, notamment au niveau de la cinétique. Les figures 4 et 5 qui ont une échelle de temps beaucoup plus courte que les figures 1 et 2, montrent que des résultats sont encore meilleurs dans le cas où le composé utilisé est une poudre nanocristalline de Mg contenant 5% at. de V (Mg_{0,95}V_{0,05}). La courbe de diffraction illustrée sur la figure 3 montre que le composé nanocristallin de formule Mg_{0,95}V_{0,05} n'est pas un alliage mais un composite, car on distingue très clairement les pics associés à Mg ( 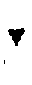 ) de ceux associés à V (°). Par contre, avec certains autres métaux (tels que, par exemple, Ni ou Al), un véritable alliage peut être obtenu avec Mg.

La demande de brevet internationale publiée le 24 juillet 1997 sous le numéro WO 97/26214 décrit des composites se présentant sous la forme d'un mélange d'une poudre nanocristalline d'un métal ou alliage capable d'absorber l'hydrogène à haute température, tels que Mg ou Mg₂Ni, avec une poudre nanocristalline d'un autre métal ou alliage capable d'absorber l'hydrogène à basse température tels que V, Nb, Mn, Pd, LaNi₅ ou FeTi. L'exemple 7 de cette demande décrit la préparation d'un tel composite par broyage d'une poudre nanocristalline de Mg avec une poudre nanocristalline de FeTi et montre la très bonne efficacité d'absorption du composite ainsi préparé.

Enfin, la demande de brevet internationale no PCT/CA97/00324 déposée le 13 mai 1997 décrit une méthode pour induire la désorption de l'hydrogène contenu dans un hydrure de métal, consistant entre-autres à soumette l'hydrure en question à un traitement mécanique capable de générer suffisamment d'énergie pour obtenir la désorption voulue. Le traitement mécanique suggéré est un traitement mécanique intense (bail milling) capable de produire un très grand nombre de défauts dans la structure qui facilite grandement la désorption thermique ultérieure de l'hydrogène (voir page 5, lignes 12 à 15).

Sur la base de cette dernière prémisse, la Demanderesse a poursuivi ses travaux de recherche en étudiant l'importance qu'il pourrait y avoir à utiliser un hydrure de magnésium (MgH₂) plutôt que du magnésium pur comme produit de départ pour la préparation d'un composé tel que décrit dans la demande internationale WO 96/23906. En effet, si le broyage mécanique intense d'un hydrure de métal introduit un si grand nombre de défauts dans la structure qu'il facilite une désorption thermique de l'hydrogène, on peut raisonnablement penser que le produit obtenu après désorption, du fait de son grand nombre de défauts, continuera d'avoir des propriétés d'absorption et de désorption améliorées.

Les figure 6 à 9 sont illustratives des résultats des travaux qui ont ainsi été effectués.

Comme on peut tout d'abord le constater en comparant les figures 6 et 7 dont les échelles de temps sont différentes, la cinétique d'absorption d'une poudre nanocristalline de Mg obtenue par broyage mécanique intense d'une poudre commerciale de MgH₂ est très supérieure à celle d'une poudre de Mg obtenue à partir du même hydrure, mais sans broyage, et ce à toutes les températures. Ceci vient confirmer l'importance que présente le broyage mécanique intense sur la cinétique d'absorption d'hydrogène d'une poudre de Mg.

Comme on peut aussi le constater en comparant la figure 7 aux figures 1 et 2, la cinétique et la capacité d'absorption d'une poudre nanocristalline de Mg obtenue par broyage mécanique intense d'une poudre commerciale de MgH₂ sont supérieures à celles d'une poudre nanocristalline de Mg obtenue par broyage mécanique intense d'une poudre commerciale de Mg. Ceci vient confirmer que l'utilisation d'hydrure de magnésium plutôt que de magnésium pur comme produit de départ lors du broyage permet d'obtenir une amélioration des propriétés d'absorption d'hydrogène, comme on pouvait le présumer au vu des résultats déjà rapportés dans la demande internationale WO 96/23906.

Les figures 8 et 9 montrent les résultats obtenus sur des poudres nanocristallines obtenue par broyage mécanique intense d'une poudre commerciale de MgH₂ en mélange avec, respectivement, 5% at. d'une poudre de Ni et 5% at. d'une poudre d'Al. Comme on peut le constater, le broyage du MgH₂ avec le Ni améliore la cinétique d'absorption à haute température par rapport au broyage du MgH₂ mais la cinétique à basse température (302°K) est à peu près la même. Par contre, dans le cas du broyage du MgH₂ avec Al, les cinétiques sont moins bonnes a toutes les températures.

Un article de FUJII H. et al publié dans le JOURNAL OF ALLOYS AND COMPOUNDS, vol. 232 (1996), L16-L19, décrit la fabrication d'une poudre de Mg₂NiH_{1.8} ayant une taille de grain de quelques manomètres par broyage mécanique intense de Mg₂Ni sous une atmosphère d'hydrogène. La poudre de Mg₂NiH_{1.8} obtenue est décrite comme étant un « composite » dans la mesure où les grains obtenus sont composés d'une matrice cristalline et d'une phase d'interface désordonnée qui constitue des joints de grain. Il ne s'agit donc pas d'un composite au sens où l'on entend dans le cadre de la présente invention, c'est-à-dire d'une poudre constituée de deux types de grains dont les compositions chimiques sont différentes. L'une et l'autre de ces deux phases sont constituées du même produit Mg₂Ni qui est pur dans la matrice et hydrogéné dans l'interface, ce qui explique le taux d'hydrogénation mesuré de 1.8 qui est très inférieur à celui des nanocomposites selon l'invention où le taux d'hydrogénation du magnésium ou du composé à base de magnésium se doit d'être celui de l'hydrure correspondant (Mg₂NiH₄ dans le cas de Mg₂Ni). A ce sujet, l'article précise dans son paragraphe 3 qu'on ne trouve aucune trace de Mg₂NiH₄ même après 80 h de broyage. En outre, les résultats rapportés sont très différents de ceux obtenus ans le cadre de la présente invention.

### Résumé de l'invention

En poursuivant les travaux de recherches ci-dessus rapportés, il a été découvert, de façon surprenante, que si (1) on utilise comme produit de départ un hydrure de magnésium ou un hydrure d'un alliage à base de magnésium en combinaison avec un autre élément ou composé connu pour absorber l'hydrogène mais pour ne pas former lors du broyage intense un alliage avec le magnésium, et (2) on soumet un mélange de poudres de ces produits de départ à un broyage mécanique intense, on obtient un composite de structure nanocristalline (ci-après appelé « nanocomposite ») ayant des performances très supérieures à tout ce que l'on pouvait prévoir des résultats des travaux déjà effectués et précédemment rapportés.

Sur la base de cette découverte, la présente invention a donc pour premier objet un procédé de préparation d'un nanocomposite à base de magnésium et d'un autre élément ou composé connu pour absorber l'hydrogène et être peu miscible au broyage avec le magnésium ou son hydrure, caractérisé en ce que :
a) on soumet du magnésium ou un composé à base de magnésium connu pour absorber l'hydrogène à une hydrogénation en vue d'obtenir l'hydrure correspondant sous la forme d'une poudre;
b) on mélange la poudre d'hydrure ainsi obtenue avec l'autre élément ou composé ou un hydrure de cet autre élément ou composé;
c) on soumet le mélange ainsi obtenu à un broyage mécanique intense jusqu'à obtention du nanocomposite correspondant sous la forme d'un hydrure; et, si requis,
d) on soumet le nanocomposite obtenu à l'étape (c) à une désorption d'hydrogène, étant entendu que l'autre élément ou composé ou son hydrure n'est pas Mg₂NiH₄.

Il est à noter que les étapes (a), (b), et (c) pourraient aussi être combinées en broyant mécaniquement un mélange de poudre sous une pression d'hydrogène en vue d'effectuer simultanément l'hydrogénation des composés.

L'invention a également pour second objet le nanocomposite à base de Mg ainsi préparé, qui a l'avantage d'être peu coûteux et d'avoir des performances inégalées pour le stockage de l'hydrogène grâce à sa microstructure (c'est-à-dire à la nature des interfaces et à la distribution spatiale de ses composantes), qui est extrêmement fine et donne lieu à un effet de synergie incroyable entre le Mg et l'autre élément ou composé.

L'invention a enfin pour troisième objet l'usage du nanocomposite à base de Mg ainsi préparé pour le stockage et le transport de l'hydrogène, notamment à bord de véhicules, dans des batteries à hydrures métalliques ou pour alimenter une génératrice ou une pile à combustible.

### DESCRIPTION DÉTAILLÉE DE L'INVENTION

Tel que précédemment résumé, le procédé selon l'invention consiste essentiellement à broyer intensément un hydrure de Mg ou d'un composé à base de Mg avec un élément ou composé qui a la capacité d'absorber l'hydrogène et est peu miscible au broyage avec le Mg ou son hydrure.

On peut utiliser comme produit de départ une poudre commerciale d'hydrure de magnésium pur (MgH₂) ou une poudre d'un hydrure d'un composé à base de magnésium de formule:

Mg₁₋ₓAₓ

dans laquelle A est au moins un élément choisi dans le groupe constitué par Li, Ca, Ti, V, Cr, Mn, Fe, Co, Ni, Cu, Zn, Al, Y, Zr, Nb, Mo, In, Sn, O, Si, B, C, F et Be, et
x est un nombre inférieur ou égal à 0,3.

On peut aussi utiliser comme produit de départ un hydrure d'un composé à base de Mg de formule:

(Mg_{2-z}Ni_{1+z})₁₋ₓAₓ

dans lequel A et x sont définis comme précédemment et z est un nombre compris entre -0.3 et +0.3.

L'autre produit de départ utilisé doit, selon l'invention, être un ou plusieurs autres éléments ou composés qui, d'une part, soient capables d'absorber l'hydrogène et, d'autre part et surtout, soient peu ou non miscibles au broyage avec le Mg ou son hydrure. Cet autre produit peut être constitué par une poudre d'un des éléments suivants: V, Ti, Fe, Co, Nb, Na, Cs, Mn, Ni, Ca, Ce, Y, La, Pd, Hf, K, Rb, Rh, Ru, Zr, Be, Cr, Ge, Si, Li ou leurs hydrures. Parmi ceux-ci, V, Ti et Nb se sont avérés être extrêmement performants. Plutôt que d'utiliser du vanadium (V) de haute pureté dont le coût est élevé, il peut être avantageux d'utiliser du ferro-vanadium tel que ceux de JAPAN INDUSTRIAL STANDARD no 1 dont la composition en pourcentage exprimée en poids est la suivante:
1) V_{80.2}; Fe_{15,8}; Al_{3,19;}Si_{0.64}; S_{0.10}; P_{0.02}
2) V_{81.3}; Fe_{14,1}; Al_{3,27}; Si_{0.51}; O_{0.51}; N_{0.07}

L'autre produit peut aussi être constitué par une poudre d'un ou plusieurs composés choisi dans le groupe constitué par LaNi₅, MₘNi₅, ZrMn₂, ZrV₂, TMn₂, Mg₂Ni et leurs hydrures à l'exception du Mg₂NiH₄, les solution solides de formules V_{1-y}Ti_{y} où y varie entre 0 et 1, (V_{0,9}Ti_{0.1})_{0.95}Fe_{0.05} et les alliages amorphes de Mg-Ni.

La poudre de cet autre produit peut être utilisée telle quelle, à savoir être mélangée en quantité adéquate avec la poudre de l'hydrure de Mg ou du composé à base du magnésium puis broyer simultanément avec celle-ci. La poudre cet autre produit peut toutefois, elle aussi, être soumise à une hydrogénation préliminaire en vue de la convertir en hydrure avant son mélange et son broyage avec l'hydrure de magnésium ou d'hydrure d'un composé'à base de magnésium.

De préférence, à l'étape (b) du procédé selon l'invention, on utilise l'autre élément ou composé en quantité telle que le pourcentage atomique ou molaire de cet autre élément ou composé dans le mélange soit inférieur ou égal à 10%. Plus préférentiellement encore, de pourcentage atomique choisi est de 3 ou 5%.

Le broyage mécanique intense peut être effectué de n'importe quelle façon connue. À ce sujet, on peut se référer au contenu des demandes de brevet internationales ci-dessus mentionnées. De préférence, on peut procéder au broyage mécanique intense des poudres dans un broyeur à barre ou à billes de type commercialisés sous les marques FRITCH et ZOZ pendant une période de l'ordre de 5 à 20 heures ou plus. De préférence aussi, on effectuera ce broyage sous atmosphère inerte. Le broyage peut être effectué en une seule étape ou en deux (broyage initial de chacune des poudres puis broyage de celles-ci ensemble). Dans tous les cas, il est essentiel que le composite obtenu soit nanocristallin.

Tel que précédemment indiqué, il est aussi possible de combiner les étapes (a), (b) et (c) en broyant le mélange de poudre sous une atmosphère d'hydrogène de façon à hydrogéner simultanément les composés.

Le produit final ainsi préparé est un nanocomposite dont les composantes sont extrêmement fines et intimement connectées. Ce nanocomposite contient un grand nombre de défauts de structure qui facilitent la désorption de l'hydrogène. Il n'y a pas ou pratiquement pas de formation d'alliage puisque les composantes Mg ou son hydrure et l'autre élément ou composé, tel V, Ti, Fe ou Nb sont non ou peu miscibles l'une dans l'autre lors du broyage.

Les nanocomposites selon l'invention surclassent tous les matériaux de stockage de l'hydrogène connus de la Demanderesse, incluant ceux décrits dans les demandes de brevet internationales ci-dessus mentionnées. Les problèmes de cinétique d'absorption du Mg sont pour ainsi dire résolus puisque les nanocomposites selon l'invention absorbent plus de 3% en poids d'hydrogène pratiquement à la température de la pièce, en quelques minutes. Quant à la désorption, la cinétique est extrêmement élevée aussi, même à des températures aussi basses que 200, 225 et 250°C (voir la figure 15). Enfin, le coût de ces nanocomposites est faible, surtout dans le cas du composite obtenu à partir de MgH₂ et 5% V, vu la faible quantité de V requise pour obtenir de bonnes performances.

Les figures 10 et 11 montrent les courbes d'absorption obtenues sur un nanocomposite préparé par broyage mécanique intense pendant 20 heures d'une poudre commerciale de MgH₂ (325 mesh) avec 5% at. d'une poudre de V pur. Ces courbes sont à comparer avec celles des Figures 7 à 9, qui rapportent des essais effectués aux mêmes températures et sous la même pression d'absorption (150 psi).

Comme on peut le constater, les nanocomposites selon l'invention ont une cinétique d'absorption beaucoup plus rapide que celles du magnésium ou des alliages de Mg et Al préparés selon une technique analogue (à savoir à partir d'une poudre d'hydrure de Mg). En fait, même à 29°C (302°K), les nanocomposites selon l'invention sont capables d'absorber de l'hydrogène alors que les produits illustrés sur les Figures 7 à 9 ne le sont pas. À des températures aussi basses que 150°C (423°K), ils sont également capables d'absorber l'hydrogène de façon quasi instantanée, alors que l'absorption est extrêmement lente dans le cas des produits des figures 7 à 9.

Pour ce qui a trait à la comparaison entre le MgH₂ + V (figure 10) et MgH₂ + Ni (figure 8), les cinétiques sont comparables à haute température mais par contre à basse température le MgH₂ + V est beaucoup plus performant.

Cette surprenante augmentation de la cinétique d'absorption peut peut-être s'expliquer par le fait que le broyage de l'hydrure de Mg avec un autre élément ou composé connu pour absorber l'hydrogène et être peu miscible avec MgH₂, cause une déstabilisation de l'hydrure de magnésium et crée de grandes surfaces et des interfaces particulières "activées" entre les grains du composite, qui permettent le transport facile et rapide de l'hydrogène.

Une comparaison entre les figures 10 et 12 montre qu'il n'y a pas d'intérêt à augmenter indûment la quantité de V dans le nanocomposite. En fait, avec 10% at. de V, les résultats sont pratiquement identiques à ceux obtenus avec 5% at. de V. Le nanocomposite étant plus lourd dans le premier cas à cause d'un plus grand pourcentage de V, le pourcentage en poids d'hydrogène absorbé, exprimé par rapport au poids du nanocomposite, est inférieur mais la quantité d'hydrogène absorbée reste en pratique sensiblement la même.

Les courbes de diffraction illustrées sur les figures 13 et 14 montrent que lors du broyage d'une poudre de MgH2 avec une poudre de V, il y a génération de pics de VH_{0.81} et donc un transfert d'une partie de l'hydrogène stocké dans le MgH₂ au vanadium (voir figure 13). De plus, le spectre de diffraction-X donné dans la figure 13 montre qu'il y a aussi formation d'une nouvelle phase métastable (Y MgH2) qui n'a jamais auparavant été observée lors des broyages mécaniques des matériaux de stockage de l'hydrogène et qui pourrait être à l'origine des performances exceptionnelles de ces nouveaux composites nanocristallins de stockage de l'hydrogène. Après désorption, la courbe de diffraction obtenue (voir figure 14) est semblable à celle illustrée sur la figure 3, mais le transfert d'hydrogène intervenu lors du broyage en utilisant un hydrure de Mg plutôt que du Mg pur comme produit de départ, conduit de toute évidence à la génération d'interfaces activées, comme l'attestent les courbes d'absorption obtenues.

Une comparaison entre les figures 10 et 11 montre également que les résultats obtenus dès la première absorption sont très comparables à ceux obtenus à la seconde absorption, quelles que soient les températures. Ceci est à comparer aux résultats rapportés sur les figures 1 et 2, où la troisième absorption était beaucoup plus rapide et efficace que la première. Ceci confirme à nouveau que le procédé selon l'invention conduit à une activation immédiate des interfaces du nanocomposite et, de là, à une meilleure capacité d'absorber.

La figure 15 montre les courbes de désorption obtenues lors d'un premier cycle de désorption à différentes températures de nanocomposite préparé à partir de MgH₂ et 5% at. V (à savoir même que celui utilisé pour les essais rapportés sur les figures 10 et 11). Comme on peut le constater, cette courbe montre que la désorption commence à s'effectuer à partir de 473K (200°C).Cette courbe montre aussi que la désorption est presque complète après 1000 secondes à 523° K (250°C) ce qui est extraordinaire pour un composé qui est pratiquement du Mg pur. Il convient en effet de rappeler que le Mg pur (c'est-à-dire le MgH₂ polycristallin) nécessite des températures de l'ordre de 350°C pour désorber l'hydrogène en 1500 secondes (voir figure 2).

La figure 16 est analogue à la figure 10 si ce n'est que le nanocomposite utilisé a été préparé par broyage mécanique intense de MgH₂ avec 3% at. seulement de V. Comme on peut le constater, les résultats sont, là encore, excellents. Il semble donc que ce ne soit pas la quantité de V qui importe, mais plutôt sa présence en quantité suffisante pour activer les surfaces et interfaces entre les grains.

Les figures 17 et 18 montrent les courbes d'absorption obtenues à 300°C et 100°C respectivement sous une pression de 150 psi avec un nanocomposite selon l'invention préparée par broyage mécanique intense de MgH₂ avec 5% at. de Nb, élément connu lui aussi pour absorber l'hydrogène et être peu miscible au broyage avec Mg. Comme on peut le constater, les résultats obtenus sont très comparables à ceux rapportés pour les nanocomposites contenant du V. On peut donc généraliser l'invention à l'usage d'autres éléments ou composés ayant les mêmes propriétés, tels à ceux que précédemment mentionnés.

La figure 19 est une courbe de diffraction effectuée sur le produit de broyage obtenu pour les essais reportés sur les figures 17 et 18. Comme on peut le constater, cette courbe montre encore qu'il y a eu transfert d'hydrogène de MgH₂ à Nb. On identifie aussi la présence d'une nouvelle phase métastable (Y MgH₂).

La figure 20 montre les courbes d'absorption et désorption obtenues à 250°C sous une pression de 150 psi avec un nanocomposite selon l'invention préparé par broyage mécanique intense de MgH₂ avec 5% at. de Pd, élément connu pour catalyser l'absorption d'hydrogène. Comme on peut le constater, il y a un effet bénéfique (*viz*. une absorption beaucoup plus rapide) lorsque l'on utilise Pd. L'effet est moindre qu'avec V ou Nb mais il est néanmoins notable.

La figure 21 montre qu'un nanocomposite selon l'invention préparé par broyage mécanique intense de MgH₂ avec un composé connu pour absorber l'hydrogène tel que Mg₂Ni, offre une bonne performance aussi. Cette performance est moins bonne que celle obtenue avec un mélange de MgH₂ et V mais elle est néanmoins là. En fait, le résultat obtenu est dans tous les cas meilleur que celui obtenu à 100°C pour le MgH₂ pur broyé.

La figure 22 est à comparer à la figure 21. Elle montre qu'un nanocomposite selon l'invention préparé par broyage mécanique intense de MgH₂ avec Mg₂NiH₄ est très légèrement meilleur que celui obtenu avec Mg₂Ni. La différence est toutefois mineure.

La figure 23 montre les courbes d'absorption obtenues à différentes températures sous une pression de 150 psi avec un nanocomposite selon l'invention préparé par broyage mécanique intense pendant 5 heures de Mg₂NiH₄ avec 10% en poids de V. On remarque que ce nanocomposite absorbe presque 1.75% en poids d'hydrogène en 3000 secondes à la température de la pièce (302°K) ce qui est remarquable bien que légèrement moins performant que le MgH₂ + 5 at. % V qui absorbe environ 2.75% en poids d'hydrogène au voisinage de la température de' la pièce durant cette même période de temps (voir figure 10). Par contre, ce résultat est très supérieur à celui obtenu avec une poudre nanocristalline de Mg₂NiH₄ obtenue après un broyage de 20 heures (voir figure 24).

La figure 25 qui est à comparer à la figure 10 montre qu'une poudre nanocomposite selon l'invention à base de MgH₂ et 5% at. de V peut être exposée à l'air pendant deux jours sans perdre ses propriétés. Ceci est très important d'un point de vue pratique.

La figure 26 est une courbe isotherme pression-concentration obtenue sur un nanocomposite selon l'invention préparé par broyage mécanique intense de MgH₂ avec 10% at. de V. Cette courbe montre qu'à une température de 563°K (290°C), l'absorption et la désorption sont pratiquement immédiates sous une pression aussi basse qu'une atmosphère.

La figure 27 montre les courbes d'absorption obtenues avec des nanocomposites selon l'invention préparés par broyage mécanique intense de MgH₂ avec 5% at. de divers éléments de transition. Comme on peut le constater, les résultats obtenus avec le titane sont supérieurs à ceux obtenus avec le vanadium. Les résultats obtenus avec le fer et le manganèse sont légèrement inférieurs mais très supérieurs à ceux obtenus avec l'ajout de nickel ou sans aucun ajout.

Les figures 28 et 29 sont des courbes analogues à celles illustrées sur la figure 27, à des températures très supérieures (373°K/100°C et 423°K/150°C). Comme on peut le constater, les différences associées à la présence des divers additifs s'estompent au fur et à mesure que les températures d'absorption s'élèvent.

La figure 30 montre des courbes de désorption obtenues sous une pression de 0 psi à 508°K (225°C) sur des nanocomposites selon l'invention incluant 5% at. d'un métal de transition choisi parmi Ti, V,Mnet Fe. Ces courbes montrent que la désorption lorsque le nanocomposite contient du titane, du vanadium et même du fer est très supérieure à celle obtenue lorsque l'additif est du manganèse.

La figure 31 est identique à la figure 30, si ce n'est que la température de désorption est de 573°K (300°C). Là encore, on peut constater qu'à haute température, les différences s'atténuent. Par contre, dans tous les cas, les résultats obtenus sont très supérieurs à ceux obtenus avec MgH₂ pur.

Les figures 32 à 37 sont des courbes d'absorption obtenues à différentes températures sous une même pression avec des nanocomposites selon l'invention préparés par broyage mécanique intense de MgH₂ avec respectivement 5% at. de Cr, Ca, Ce, Y et La. Ces métaux sont connus pour être capables d'absorber l'hydrogène et d'être peu ou non miscibles au broyage avec le Mg ou son équivalent. Comme on peut à nouveau le constater, d'excellents résultats sont obtenus.

Les figures 37 à 39 sont des courbes identiques, montrant l'absorption obtenue à diverses températures sous une même pression de 150 psi avec des nanocomposites selon l'invention préparés par broyage mécanique intense de MgH₂ avec plus d'un élément ou composé additionnel. Là encore, ces courbes montrent que d'excellents résultats sont obtenus.

La figure 40 montre les courbes de désorption obtenues à 523°K (250°C) sous une pression de 0.015 MPa avec divers nanocomposites selon l'invention. Comme on peut le constater, ceux à base de vanadium, LaNi₅, ou d'un mélange de vanadium et de LaNi₅ sont extrêmement performants.

À titre d'information, le tableau 1 ci-dessous indique les transformations de phase au broyage après désorption d'hydrogène pour les différents types de nanocomposites exemplifiés, dont l'élément ajouté est un métal de transition choisi parmi Ti, V, Mn, Fe et Ni. Le tableau II ci-dessous indique l'énergie d'activation correspondante pour leur désorption. Comme on peut le constater, il est plus facile de désorber l'hydrogène des systèmes MgH₂-V, MgH₂₋ Fe et MgH₂-Ti que des systèmes MgH₂-Ni et MgH₂-Mn. Par contre, dans tous les cas, la désorption est beaucoup plus facile qu'avec MgH₂ broyé seul ou, mieux encore, MgH₂ non broyé seul.

**TABLEAU I**

| **Transformation de phase durant le broyage et la déshydrogénation** | |
|---|---|
| broyage mécanique | désorption |
| β-MgH₂+Ti⇒Y-MgH₂+β MgH₂+TiH₂+Mg⇒H₂+Mg | |
| β-MgH₂+V⇒Y-MgH₂+β MgH₂+VHx+Mg⇒Mg+V | |
| β-MgH₂+Mn⇒Y-MgH₂+β MgH₂+Mn⇒Mg+Mn | |
| β-MgH₂+Fe⇒Y-MgH₂+β MgH₂+Mg₂FeH₆⇒Mg+Fe | |
| β-MgH₂+Ni⇒Y-MgH₂+β MgH₂+Mg₂NiH₄⇒Mg+Mg₂Ni | |

**TABLEAU II**

| **Énergie d'activation pour la désorption (KJ/mol)** | | | | | | |
|---|---|---|---|---|---|---|
| Mg-Ti | Mg-V | Mg-Mn | Mg-Fe | Mg-Ni | MgH₂ broyé | MgH₂ non broyé |
| 71.1 | 62.34 | 104.59 | 67.6 | 88.1 | 120 | 156 |

Il va de soi que de nombreuses modifications pourraient être apportées à ce qui vient d'être décrit sans sortir du cadre de l'invention telle que définie dans les revendications annexées.

## Revendications

1. Procédé de préparation d'un nanocomposite de structure nanocristalline à base de magnésium et d'un ou plùsieurs autres éléments ou composés connus pour absorber l'hydrogène et être peu miscibles au broyage avec le magnésium ou son hydrure, **caractérisé en ce que** :
(a) on soumet à une hydrogénation du magnésium ou un composé à base de magnésium connu pour absorber l'hydrogène en vue d'obtenir l'hydrure correspondant sous la forme d'une poudre;
(b) on mélange la poudre d'hydrure ainsi obtenue avec l'autre ou les autres éléments ou composés ou un hydrure de ce ou ces autres éléments ou composés;
(c) on soumet le mélange ainsi obtenu à un broyage mécanique intense jusqu'à obtention du nanocomposite correspondant sous la forme d'un hydrure; et, si requis,
(d) on soumet le nanocomposite obtenu à l'étape (c) à une désorption d'hydrogène, étant entendu que l'autre élément ou composé ou son hydrure n'est pas Mg₂NiH₄.

2. Procédé selon la revendication 1, **caractérisé en ce que**, à l'étape (a), on utilise du magnésium.

3. Procédé selon la revendication 1, **caractérisé en ce que**, à l'étape (a), on utilise un composé à base de magnésium de formule:
Mg₁₋ₓAₓ
dans lequel A est au moins un élément choisi dans le groupe constitué par Li, Ca, Ti, V, Cr, Mn, Fe, Co, Ni, Cu, Zn, Al, Zr, Nb, Mo, In, Sn, O, Si, B, C, F et Be, et
x est un nombre inférieur ou égal à 0,3.

4. Un procédé selon la revendication 1 ou 2, **caractérisé en ce qu'**à l'étape (a), on utilise un composé à base de magnésium dé formule :
(Mg_{2-z}Ni_{1+z})₁₋ₓAₓ
dans lequel A et x sont définis comme dans la revendication 3, et z est un nombre compris entre -0,3 et +0,3.

5. Procédé selon l'une quelconque des revendications 1 à 4, **caractérisé en ce que**, à l'étape (b), on utilise un autre élément et cet autre élément est choisi dans le groupe constitué par V, Ti, Fe, Co, Nb, Na, Cs, Mn, Ni, Ca, Ce, Y, La, Pd, Hf, K, Rb, Rh, Ru, Zr, Be, Cr, Ge, Si, Li et leurs hydrures.

6. Procédé selon la revendication 5 **caractérisé en ce que** l'autre élément est V.

7. Procédé selon la revendication 5, **caractérisé en ce que** l'autre élément est Nb.

8. Procédé selon l'une quelconque des revendication 1 à 4, **caractérisé en ce que**, à l'étape (b), on utilise un ou plusieurs autres composés choisis dans le groupe constitué par LaNi₅, MmNi₅, ZrMn₂, ZrV₂, TiMn₂, Mg₂Ni et leurs hydrures à l'exception du Mg₂NiH₄, les solutions solides de formules V_{1-y}Ti_{y} où y varie de 0 à 1, (V_{0,9}Ti_{0,1})_{0,95} Fe_{0.05} et les alliages amorphes de Mg-Ni.

9. Procédé selon l'une quelconque des revendications 6 à 8, **caractérisé en ce que**, à l'étape (b), on utilise l'autre élément ou composé en quantité telle que le pourcentage atomique ou molaire de et autre élément ou composé dans le mélange soit inférieur ou égal à 10%.

10. Procédé selon la revendication 9, **caractérisé en ce que**, à l'étape (b) on utilise l'autre élément ou composé en quantité telle que le pourcentage atomique de cet autre élément ou composé dans le mélange soit égal à 5%.

11. Procédé selon la revendication 10, **caractérisé en ce que**, à l'étape (b), on utilise l'autre élément ou composé en quantité telle que le pourcentage atomique de cet autre élément ou composé dans le mélange soit égal à 3%.

12. Procédé selon l'une quelconque des revendications 1 à 11 **caractérisé en ce que**, à l'étape (c), on soumet le mélange à un broyage mécanique intense dans un broyeur à billes pour une période comprise entre 5 et 20 heures.

13. Un nanocomposite de structure nanocristalline à base de magnésium et d'un ou plusieurs autres éléments ou composés connus pour absorber l'hydrogène, **caractérisé en ce qu'**il est obtenu par le procédé selon l'une quelconque des revendications 1 à 12 et il présente une microstructure très fine avec des interfaces activées.

14. Usage du nanocomposite selon la revendication 13 pour le stockage et le transport de l'hydrogène.

## Patentansprüche

1. Verfahren zur Herstellung eines Nanokomposits nanokritalliner Struktur auf Basis von Magnesium und einem oder mehreren anderen Elementen oder Verbindungen, bekannt für das Absorbieren von Wasserstoff und dafür, dass sie beim Zerkleinern mit dem Magnesium oder seinem Hydrid wenig mischbar sind, **dadurch gekennzeichnet, dass**:
(a) man Magnesium oder eine Verbindung auf Magnesiumbasis, bekannt für das Absorbieren von Wasserstoff, einer Hydrierung unterwirft, um das entsprechende Hydrid in Form eines Pulvers zu erhalten;
(b) das so erhaltene Hydridpulver mit dem anderen oder den anderen Elementen oder Verbindungen oder einem Hydrid derselben oder der anderen Elemente oder Verbindungen mischt;
(c) die so erhaltene Mischung einer intensiven mechanischen Zerkleinerung unterwirft bis zum Erhalt des entsprechenden Nanokomposits in Form eines Hydrids und, falls erforderlich,
(d) das in Schritt (c) erhaltene Nanokomposit einer Wasserstoffdesorption unterwirft, wobei wiederum das andere Element oder die Verbindung oder dessen bzw. deren Hydrid nicht Mg₂NiH₄ ist.

2. Verfahren gemäß Anspruch 1, **dadurch gekennzeichnet, dass** man in Schritt (a) Magnesium verwendet.

3. Verwendung gemäß Anspruch 1, **dadurch gekennzeichnet, dass** man in Schritt (a) eine Verbindung auf Magnesiumbasis der Formel:
Mg₁₋ₓAₓ
verwendet, worin A mindestens ein Element ist, ausgewählt aus der Gruppe, bestehend aus Li, Ca, Ti, V, Cr, Mn, Fe, Co, Ni, Cu, Zn, Al, Zr, Nb, Mo, In, Sn, O, Si, B, C, F und Be, und worin x eine Zahl kleiner oder gleich 0,3 ist.

4. Verfahren gemäß Anspruch 1 oder 2, **dadurch gekennzeichnet, dass** man in Schritt (a) eine Verbindung auf Magnesiumbasis der Formel:
(Mg_{2-z}Ni_{1+z})₁₋ₓAₓ
verwendet, worin A und x wie in Anspruch 3 definiert sind und z eine Zahl zwischen -0,3 und +0,3 ist.

5. Verfahren gemäß einem der Ansprüche 1 bis 4, **dadurch gekennzeichnet, dass** man in Schritt (b) ein anderes Element verwendet und dieses andere Element ausgewählt ist aus der Gruppe, bestehend aus V, Ti, Fe, Co, Nb, Na, Cs, Mn, Ni, Ca, Ce, Y, La, Pd, Hf, K, Rb, Rh, Ru, Zr, Be, Cr, Ge, Si, Li und deren Hydriden.

6. Verfahren gemäß Anspruch 5, **dadurch gekennzeichnet, dass** das andere Element V ist.

7. Verfahren gemäß Anspruch 5, **dadurch gekennzeichnet, dass** das andere Element Nb ist.

8. Verfahren gemäß einem der Ansprüche 1 bis 4, **dadurch gekennzeichnet, dass** man in Schritt (b) eine oder mehrere andere Verbindungen verwendet, ausgewählt aus der Gruppe, bestehend aus LaNi₅, MmNi₅, ZrMn₂, ZrV₂, TiMn₂, Mg₂Ni und deren Hydriden, mit Ausnahme von Mg₂NiH₄, festen Lösungen der Formeln V_{1-y}Ti_{y}, worin y zwischen 0 und 1 schwankt, (V_{0,9}Ti_{0,1})_{0.95}Fe_{0.05} und amorphen Legierungen von Mg-Ni.

9. Verfahren gemäß einem der Ansprüche 6 bis 8, **dadurch gekennzeichnet, dass** man in Schritt (b) das andere Element oder die Verbindung in einer solchen Menge verwendet, dass der Atomprozent- oder Molarprozentgehalt dieses anderen Elements oder dieser Verbindung in der Mischung kleiner oder gleich 10 % ist.

10. Verfahren gemäß Anspruch 9, **dadurch gekennzeichnet, dass** man in Schritt (b) das andere Element oder die Verbindung in einer solchen Menge verwendet, dass der Atomprozentgehalt dieses anderen Elements oder dieser Verbindung in der Mischung gleich 5 % ist.

11. Verfähren gemäß Anspruch 10, **dadurch gekennzeichnet, dass** man in Schritt (b) das andere Element oder die Verbindung in einer solchen Menge verwendet, dass der Atomprozentgehalt dieses anderen Elements oder dieser Verbindung in der Mischung gleich 3 % ist.

12. Verfahren gemäß einem der Ansprüche 1 bis 11, **dadurch gekennzeichnet, dass** man in Schritt (c) die Mischung einer intensiven mechanischen Zerkleinerung in einer Kugelmühle für eine Zeitspanne zwischen 5 und 20 Stunden unterwirft.

13. Nanokomposit nanokristalliner Struktur auf Basis von Magnesium und einem oder mehreren anderen Elementen oder Verbindungen, bekannt für das Absorbieren von Wasserstoff, **dadurch gekennzeichnet, dass** es gemäß einem Verfahren nach einem der Ansprüche 1 bis 12 erhalten wird und in sehr feiner Mikrostruktur mit aktiven Grenzflächen vorliegt.

14. Verwendung eines Nanokomposits gemäß Anspruch 13 für die Speicherung und den Transport von Wasserstoff.

## Claims

1. A process for preparing a nanocomposite based on magnesium and at least one or several other elements or compounds known to absorb hydrogen and to be very few miscible with magnesium or its hydride during grinding, **characterized in that** it comprises:
a) subjecting magnesium or a magnesium-based compound known to absorb hydrogen, to a hydrogenation in order to obtain the corresponding hydride in the form of a powder;
b) mixing the so-obtained hydride powder with the other element(s) or compound(s) or with a hydride of said other element(s) or compound(s);
c) subjecting the so-obtained mixture to an intensive mechanical grinding in order to obtain the corresponding nanocomposite in the form of a hydride; and, if required,
d) subjecting the nanocomposite obtained in step c) to a hydrogen desorption,
with the proviso that the other element or compound or its hydride is not Mg₂NiH₄.

2. The process according to claim 1, **characterized in that**, in step a), use is made of magnesium.

3. The process according to claim 1, **characterized in that**, in step a), use is made of a magnesium-based compound of the formula:
Mg₁₋ₓAₓ
wherein A is at least one element selected from the group consisting of Li, Ca, Ti, V, Cr, Mn, Fe, Co, Ni, Cu, Zn, Al, Y, Zr, Nb, Mo, In, Sn, O, Si, B, C, F and Be, and x is a number equal to or lower than 0.3.

4. The process according to claim 1, **characterized in that** in step a), use is made of a magnesium-based compound of the formula:
(Mg_{2-z}Ni_{1+z})₁₋ₓAₓ
in which A and x are defined as in claim 3 and z is a number comprised between -0.3 to +0.3.

5. The process according to any one of claims 1 to 4, **characterized in that**, in step b), use is made of another element and said other element is selected from the group consisting of V, Ti, Fe, Co, Nb, Na, Cs, Mn, Ni, Ca, Ce, Y, La, Pd, Hf, K, Rb, Rh, Ru, Zr, Be, Cr, Ge, Si, Li and their hydrides.

6. The process according to claim 5, **characterized in that** the other element is V.

7. The process according to claim 5, **characterized in that** the other element is Nb.

8. The process according to any one of claims 1 to 4, **characterized in that** in step b), use is made of another compound and said at least one other compound is selected from the group consisting of LaNi₅, MmNi₅, ZrMn₂, ZrV₂, TiMn₂, Mg₂Ni and their hydrides, except Mg₂NiH₄, the solid solutions of the formula V_{1-y} T_{y} where y ranges from 0 to 1, (V_{0.9}Ti_{0.1})_{0.95} Fe_{0.05} and the amorphous alloys of Mg-Ti.

9. The process according to any one of claims 6 to 8, **characterized in that** in step b), use is made of the other element or compound in such an amount that the atomic or molar percentage of said other element or compound in the mixture be equal to or lower than 10%.

10. The process according to claim 9, **characterized in that**, in step b), use is made of the other element or compound in such an amount that the atomic percentage of said other element or compound in the mixture is equal to 5%.

11. The process according to claim 10, **characterized in that**, in step b), use is made of the other element or compound in such an amount of the atomic percentage of said other element or other compound in a mixture be equal to 3%.

12. The process according to any one of claims 1 to 11, **characterized in that** in step c), the mixture is subjected to an intensive mechanical grinding in a ball milling machine for a period of 5 to 20 hours.

13. A nanocomposite based on magnesium and one or more other elements or compounds known to absorb hydrogen, **characterized in that** it is obtained by the process according to any one of claims 1 to 12 and it has a very fine microstructure with activated interfaces.

14. Use of the nanocomposite according to claim 13 for storing and transporting hydrogen.
